# EUROPEAN PATENT APPLICATION

(11) **EP 4 517 520 A1**
(43) Date of publication of application: **05.03.2025**
(21) Application number: 23838846.6
(22) Date of filing: 07.07.2023
(51) Int. Cl.: G06F 9/451

(54) **DISPLAY METHOD AND ELECTRONIC DEVICE**

(30) Priority: 11.07.2022 CN 202210809466
(71) Applicant: Huawei Technologies Co., Ltd., Shenzhen, Guangdong 518129 (CN)
(72) Inventor: JIANG, Xiuping, Shenzhen, Guangdong 518129 (CN); YANG, Yixuan, Shenzhen, Guangdong 518129 (CN); ZHU, Pei, Shenzhen, Guangdong 518129 (CN)
(74) Representative: Goddar, Heinz J.
(86) International application number: PCT/CN2023/106225
(87) International publication number: WO 2024/012354

(57) **Abstract**

This application provides a display method and an electronic device. The method is applied to the electronic device. The method includes: The electronic device displays a first viewing window, where the first viewing window includes a first interface of a first application; receives a first user operation, where the first user operation is used to widen the first viewing window; and displays a second viewing window, where the second viewing window includes the first interface and a second interface of the first application. The method further includes: receiving a second user operation, where the second user operation is used to widen the first interface in the second viewing window; and displaying a third viewing window, where a width of the first interface in the third viewing window is greater than a width of the first interface in the second viewing window, and a width of the second interface in the third viewing window is equal to a width of the second interface in the second viewing window. According to this application, a viewing window zooming function with good use experience can be provided for a user, and a visual effect and operation experience can be improved.

## Description

This application claims priority to Chinese Patent Application No. 202210809466.0, filed with the China National Intellectual Property Administration on July 11, 2022 and entitled "DISPLAY METHOD AND ELECTRONIC DEVICE", which is incorporated herein by reference in its entirety.

### TECHNICAL FIELD

This application relates to the field of computer technologies, and in particular, to a display method and an electronic device.

### BACKGROUND

Currently, most windows displayed on a terminal are in a fixed layout. When a user stretches a window, the terminal usually zooms in or out the window proportionally. Alternatively, although the user may stretch the window horizontally or vertically, a case in which a layout is disordered or content such as a picture is distorted may occur in a stretched window, and in a serious case, even an application may be unavailable. A visual effect and operation experience are poor, and experience of the user using a window zooming function is poor.

### SUMMARY

This application discloses a display method and an electronic device, to provide a window zooming function with good use experience for a user, and improve a visual effect and operation experience.

According to a first aspect, this application provides a display method, applied to an electronic device. The method includes: displaying a first viewing window, where the first viewing window includes a first interface of a first application; receiving a first user operation, where the first user operation is used to widen the first viewing window; and displaying a second viewing window in response to the first user operation, where the second viewing window includes the first interface and a second interface of the first application.

In a possible implementation, that the first user operation is used to widen the first viewing window includes: the first user operation is used to increase a width of the first viewing window. In some examples, when the first user operation is used to widen the first viewing window, the first user operation is further used to change a height of the first viewing window (for example, increase the height). In some other examples, when the first user operation is used to widen the first viewing window, the height of the first viewing window remains unchanged. In this application, a user operation used to widen a viewing window is similar to the foregoing first user operation. Refer to the foregoing descriptions.

In the foregoing method, after receiving the first user operation used to widen the first viewing window, the electronic device may start an app multiplier mode of the viewing window. To be specific, two interfaces of the first application are displayed in the second viewing window obtained through widening, and the first viewing window is not proportionally zoomed in (where a ratio of the width and the height of the viewing window obtained before zooming in is the same as those of a viewing window obtained after zooming in). This better meets a user requirement related to the first user operation. Nor is the first viewing window directly widened, to avoid a case in which a layout is disordered and content such as a picture is distorted. In this way, a visual effect of the viewing window and operation experience are improved, and a viewing window zooming function with good use experience is provided for a user.

In a possible implementation, the first user operation includes a user operation of sliding leftward with a left edge of the first viewing window as a start point, or a user operation of sliding rightward with a right edge of the first viewing window as a start point.

For example, the sliding leftward with a left edge of the first viewing window as a start point includes: sliding leftward with an upper left corner of the first viewing window as the start point, sliding leftward with a lower left corner of the first viewing window as the start point, sliding leftward with a middle position of the left edge of the first viewing window as the start point, or sliding leftward with a position that is a preset value away from the left edge of the first viewing window as the start point. In this application, sliding by using a left edge or a right edge of the viewing window as a start point is similar to sliding leftward with the left edge of the first viewing window as the start point. Refer to the foregoing descriptions.

In a possible implementation, the displaying a second viewing window includes: displaying the second viewing window when a ratio of a width to a height of a widened first viewing window is greater than or equal to a preset ratio, where the width of the widened first viewing window is determined based on the first user operation.

In a possible implementation, the method further includes: displaying, in response to the first user operation when the ratio of the width to the height of the widened first viewing window is less than the preset ratio, a third viewing window that is obtained by widening the first viewing window.

In a possible implementation, the preset ratio is greater than 1. For example, the preset ratio is four thirds.

In the foregoing method, when the first user operation is used to widen the first viewing window to a viewing window whose ratio of a width to a height is less than the preset ratio, the electronic device may directly widen the first viewing window. When the first user operation is used to widen the first viewing window to a viewing window whose ratio of a width to a height is greater than or equal to the preset ratio, the app multiplier mode of the viewing window may be started. The preset ratio may be determined by the electronic device based on a display effect of the first application, to further improve a display effect of the viewing window and improve user experience.

In a possible implementation, the second interface is a previous-level interface or a next-level interface of the first interface.

In the foregoing method, the electronic device displays, in the second viewing window in response to the first user operation used to widen the first viewing window, the first interface in the first viewing window and the previous-level interface or the next-level interface that is closely associated with the first interface. This better conforms to a use habit of the user and improves user experience.

In a possible implementation, widths of the first interface and the second interface in the second viewing window are equal.

In the foregoing method, the electronic device may display the first interface and the second interface in the second viewing window at a ratio of 1:1, to ensure a display effect of the two interfaces as much as possible, and improve user experience.

In a possible implementation, the method further includes: receiving a second user operation, where the second user operation is used to widen the first interface in the second viewing window; and displaying, in response to the second user operation, a fourth viewing window obtained by widening the second viewing window, where a width of the first interface in the fourth viewing window is greater than a width of the first interface in the second viewing window, and a width of the second interface in the fourth viewing window is equal to a width of the second interface in the second viewing window.

In a possible implementation, the first interface in the second viewing window is located on a left side of the second interface. The second user operation includes: a user operation of sliding leftward with a left edge of the second viewing window as a start point; a user operation of sliding rightward with a drag bar that is in the second viewing window and that is located between the first interface and the second interface as a start point; or a user operation performed on a first control in the first interface.

In the foregoing method, when the user performs the second user operation, the electronic device not only can widen the entire second viewing window based on the second user operation, but also can widen the first interface that is in the second viewing window and that is related to the second user operation. In this way, the viewing window zooming function is more suitable for a user intention, and the display effect of the viewing window and the operation experience are further improved.

In a possible implementation, the widths of the first interface and the second interface in the second viewing window are equal, and the width of the first interface is greater than the width of the second interface in the fourth viewing window.

In a possible implementation, the displaying a fourth viewing window obtained by widening the second viewing window includes: displaying, in full screen, the fourth viewing window obtained by widening the second viewing window.

For example, when the second user operation includes a user operation of sliding toward an upper left corner of a display of the electronic device by using an upper left corner of the second viewing window as a start point, a user operation of sliding toward a lower left corner of a display of the electronic device by using a lower left corner of the second viewing window as a start point, the electronic device displays, in full screen in response to the second user operation, the fourth viewing window obtained by widening the second viewing window.

In a possible implementation, the method further includes: receiving a third user operation, where the third user operation is used to widen the fourth viewing window; and displaying, in full screen in response to the third user operation, a fifth viewing window obtained by widening the fourth viewing window.

For example, the third user operation includes a user operation of sliding toward an upper left corner of a display of the electronic device by using an upper left corner of the fourth viewing window as a start point, or a user operation of sliding toward a lower left corner of a display of the electronic device by using a lower left corner of the fourth viewing window as a start point.

For example, if the third user operation is used to widen the first interface in the fourth viewing window, a width of the first interface in the fifth viewing window is greater than the width of the first interface in the fourth viewing window. Optionally, the width of the first interface in the fifth viewing window is greater than a width of the second interface in the fifth viewing window.

In the foregoing method, the electronic device may display a widened viewing window (including the first interface and the second interface of the first application) in full screen based on a user operation used to widen a viewing window, to broaden an application scenario of the window zooming function, and meet a requirement of the user for viewing a full-screen viewing window.

In a possible implementation, the method further includes: receiving a fourth user operation, where the fourth user operation is used to widen the first interface in the fourth viewing window; and displaying the first interface in full screen in response to the fourth user operation.

For example, the first interface in the fourth viewing window is located on a left side of the second interface. The fourth user operation includes: a user operation of sliding leftward with a left edge of the fourth viewing window as a start point; a user operation of sliding rightward with a drag bar that is in the fourth viewing window and that is located between the first interface and the second interface as a start point; or a user operation performed on a control in the first interface.

In the foregoing method, when the user performs the fourth user operation, the electronic device may display, in full screen, the first interface that is in the fourth viewing window and that is related to the fourth user operation. In this way, the viewing window zooming function is more suitable for a user intention, and the display effect of the viewing window and the operation experience are further improved.

In a possible implementation, the method further includes: receiving a fifth user operation, where the fifth user operation is used to narrow the fifth viewing window; and displaying, in response to the fifth user operation, a sixth viewing window obtained by narrowing the fifth viewing window.

In a possible implementation, that the fifth user operation is used to narrow the fifth viewing window includes: the fifth user operation is used to reduce a width of the fifth viewing window. In some examples, when the fifth user operation is used to narrow the fifth viewing window, the fifth user operation is further used to change a height of the fifth viewing window (for example, reduce the height). In some other examples, when the fifth user operation is used to narrow the fifth viewing window, the height of the fifth viewing window remains unchanged. In this application, a user operation used to narrow a viewing window is similar to the foregoing fifth user operation. Refer to the foregoing descriptions.

For example, the fifth user operation includes a user operation of sliding rightward with a left edge of the fifth viewing window as a start point, or a user operation of sliding leftward with a right edge of the fifth viewing window as a start point.

In the foregoing method, the user may narrow the fifth viewing window displayed in full screen to the sixth viewing window displayed in non-full screen, to meet a viewing window zooming requirement of the user in a specific scenario, and improve user experience.

In a possible implementation, the method further includes: receiving a sixth user operation, where the sixth user operation is used to narrow the first interface in the second viewing window; and displaying, in response to the sixth user operation, a seventh viewing window obtained by narrowing the second viewing window, where a width of the first interface in the seventh viewing window is less than a width of the first interface in the second viewing window, and a width of the second interface in the seventh viewing window is equal to a width of the second interface in the second viewing window.

For example, the first interface in the second viewing window is located on a left side of the second interface. The sixth user operation includes: a user operation of sliding rightward with a left edge of the second viewing window as a start point; a user operation of sliding leftward with a drag bar that is in the second viewing window and that is located between the first interface and the second interface as a start point; or a user operation performed on a control in the first interface.

In the foregoing method, when the user performs the sixth user operation, the electronic device not only can narrow the entire second viewing window based on the sixth user operation, but also can narrow the first interface that is in the second viewing window and that is related to the sixth user operation. In this way, the viewing window zooming function is more suitable for a user intention, and the display effect of the viewing window and the operation experience are further improved.

In a possible implementation, the method further includes: receiving a seventh user operation, where the seventh user operation is used to narrow the second viewing window; and displaying an eighth viewing window in response to the seventh user operation, where the eighth viewing window includes the first interface or the second interface.

In a possible implementation, the sixth user operation includes a user operation of sliding rightward with any position between an upper left corner and a lower left corner of a left edge of the second viewing window as a start point. The seventh user operation includes a user operation of sliding lower rightward with an upper left corner of the second viewing window as a start point, or a user operation of sliding upper rightward with a lower left corner of the second viewing window as a start point.

In a possible implementation, the displaying an eighth viewing window includes: when a ratio of a width to a height of a narrowed second viewing window is less than the preset ratio, displaying the eighth viewing window. In an implementation, the method further includes: in response to the seventh user operation when the ratio of the width to the height of the narrowed second viewing window is greater than or equal to the preset ratio, displaying a viewing window obtained by narrowing the second viewing window. In this way, a display effect of the viewing window is further improved, and user experience is better.

In a possible implementation, when the seventh user operation is used to narrow the first interface in the second viewing window, the eighth viewing window includes the first interface but does not include the second interface. In this way, the viewing window zooming function is more suitable for a user intention, and the display effect of the viewing window and the operation experience are further improved.

In the foregoing method, after receiving the seventh user operation used to narrow the second viewing window (including the two interfaces of the first application), the user may end the app multiplier mode of the second viewing window. To be specific, an interface of the first application is displayed in the eighth viewing window obtained through narrowing, and the second viewing window is not proportionally zoomed out (where a ratio of the width and the height of the viewing window obtained before zooming out is the same as that of a viewing window obtained after zooming out), to avoid a case in which the user cannot normally view content after content in a user interface is zoomed out. Nor is the second viewing window directly narrowed, to avoid a case in which a layout is disordered and content such as a picture is distorted. In this way, the visual effect of the viewing window and the operation experience are improved, and the viewing window zooming function with good use experience is provided for the user.

In a possible implementation, the method further includes: receiving an eighth user operation, where the eighth user operation is used to narrow the first viewing window; and displaying a second control in response to the eighth user operation.

For example, the second control is a floating bubble.

In a possible implementation, the method further includes: displaying the first viewing window in response to a user operation (for example, a tap operation) performed on the second control.

In a possible implementation, the displaying a second viewing window includes: displaying the second viewing window when the first application supports an app multiplier mode. The method further includes: displaying a ninth viewing window in response to the first user operation when the first application does not support the app multiplier mode, where the ninth viewing window includes the first interface but does not include the second interface.

In a possible implementation, the ninth viewing window is obtained by proportionally zooming in the first viewing window, and a ratio of a width to a height of the ninth viewing window is equal to a ratio of the width to the height of the first viewing window. In another possible implementation, the ninth viewing window is obtained by widening the first viewing window. In another possible implementation, the ninth viewing window is the same as the first viewing window.

In a possible implementation, the displaying a second viewing window includes: displaying the second viewing window when the first application does not support a resize function. The method further includes: displaying a tenth viewing window in response to the first user operation when the first application supports the resize function, where the tenth viewing window is obtained by widening the first viewing window based on the resize function, and the tenth viewing window includes the first interface.

For example, a layout of the first interface in the tenth viewing window is different from a layout of the first interface in the first viewing window.

In a possible implementation, the displaying a fourth viewing window obtained by widening the second viewing window includes: displaying, when the first application supports a stretch function in an app multiplier mode, the fourth viewing window obtained by widening the second viewing window. The method further includes: displaying an eleventh viewing window in response to the second user operation when the first application does not support the stretch function in the app multiplier mode, where a proportion of the first interface in the eleventh viewing window is equal to a proportion of the first interface in the second viewing window.

In a possible implementation, when the first application supports the stretch function in the app multiplier mode, a width and/or a height of the second viewing window may change. Optionally, widths and/or heights of interfaces in the second viewing window may change.

For example, the proportion of the first interface in the eleventh viewing window is a ratio of a width of the first interface in the eleventh viewing window to a width of the eleventh viewing window, and the proportion of the first interface in the second viewing window is a ratio of the width of the first interface in the second viewing window to the width of the second viewing window.

In a possible implementation, the eleventh viewing window is obtained by proportionally zooming in the second viewing window, and a ratio of the width to a height of the eleventh viewing window is equal to a ratio of the width to the height of the second viewing window. In another possible implementation, the eleventh viewing window and the second viewing window are the same.

In a possible implementation, the method further includes: displaying a third interface, where the third interface includes a plurality of viewing windows run on the electronic device, the plurality of viewing windows include a twelfth viewing window, and the twelfth viewing window includes a fourth interface of a second application; receiving a ninth user operation performed on a third control in the third interface, where the third control is related to the twelfth viewing window; and displaying a thirteenth viewing window, where the thirteenth viewing window includes the fourth interface and a fifth interface of the second application.

For example, the third interface is a user interface of a multi-task viewing window.

In a possible implementation, the method further includes: receiving a user operation performed on a fourth control in the third interface, where the fourth control is related to the twelfth viewing window, and the fourth control is different from the third control; and displaying the viewing window including the fourth interface.

In the foregoing method, for any viewing window in the multi-task viewing window, the user may choose to directly display the viewing window in full screen, or may choose to display the viewing window (for example, display the thirteenth viewing window) in an app multiplier mode. This is flexible in use, meets personalized requirements of the user, and improves user experience.

In a possible implementation, the displaying a first viewing window includes: displaying the first viewing window and a fourteenth viewing window, where the first viewing window is displayed at a lower layer of the fourteenth viewing window. The displaying a second viewing window includes: displaying the second viewing window and the fourteenth viewing window, where the second viewing window is displayed at an upper layer of the fourteenth viewing window.

For example, the fourteenth viewing window includes all viewing windows except the first viewing window in viewing windows run in a foreground of the electronic device.

In the foregoing method, when widening the first viewing window, the electronic device adjusts a display level of the second viewing window obtained through widening to be higher than a display level of the fourteenth viewing window, to facilitate subsequent operation of the viewing window by the user, comply with a use habit of the user, and improve user experience.

According to a second aspect, this application provides an electronic device, including a transceiver, a processor, and a memory, where the memory is configured to store a computer program, and the processor invokes the computer program to perform the display method in any possible implementation of any one of the foregoing aspects.

According to a third aspect, this application provides a computer storage medium, where the computer storage medium stores a computer program. The computer program includes instructions, and when the instructions are run on a processor, the display method in any possible implementation of any one of the foregoing aspects is implemented.

According to a fourth aspect, this application provides a computer program product, where when the computer program product runs on an electronic device, the electronic device is enabled to perform the display method in any possible implementation of any one of the foregoing aspects.

According to a fifth aspect, this application provides an electronic device, including one or more processors and one or more memories. The one or more memories are coupled to the one or more processors. The one or more memories are configured to store computer program code. The computer program code includes computer instructions. When the one or more processors execute the computer instructions, a communication apparatus is enabled to perform the display method according to any possible implementation of any one of the foregoing aspects.

According to a sixth aspect, this application provides an electronic device, where the electronic device includes the method or the apparatus described in any implementation of this application. For example, the electronic device is a chip.

It should be understood that, descriptions of technical features, technical solutions, beneficial effects, or similar words in this application do not imply that all characteristics and advantages can be implemented in any individual implementation. On the contrary, it may be understood that, the descriptions of the features or the beneficial effects mean that at least one implementation includes a specific technical feature, technical solution, or beneficial effects. Therefore, the descriptions of the technical features, the technical solutions, or the beneficial effects in this specification may not necessarily be specific to a same implementation. Further, the technical features, the technical solutions, and the beneficial effects described in this application may be combined in any appropriate manner. Persons skilled in the art may understand that this application may be implemented without one or more specific technical features, technical solutions, or beneficial effects in a specific implementation. In another implementation, additional technical features and beneficial effects may be further identified in a specific implementation that does not reflect this application.

### BRIEF DESCRIPTION OF DRAWINGS

The following describes the accompanying drawings used in this application.
FIG. 1(A) and FIG. 1(B) and FIG. 2 are diagrams of some user interfaces in which a window is zoomed in or out according to this application;
FIG. 3 is a diagram of a hardware structure of an electronic device according to this application;
FIG. 4 is a diagram of a software architecture of an electronic device according to this application;
FIG. 5(A) and FIG. 5(B) are diagrams of a user interface in an implementation according to this application;
FIG. 6(A) to FIG. 6(C) are diagrams of a user interface in another implementation according to this application;
FIG. 7(A) and FIG. 7(B) and FIG. 8(A) and FIG. 8(B) are diagrams of user interfaces in some other implementations according to this application;
FIG. 9(A) to FIG. 9(C) are diagrams of a user interface in another implementation according to this application;
FIG. 10(A) and FIG. 10(B) and FIG. 11(A) and FIG. 11(B) are diagrams of user interfaces in some other implementations according to this application;
FIG. 12(A) and FIG. 12(B) and FIG. 13(A) and FIG. 13(B) are diagrams of user interfaces in some other implementations according to this application;
FIG. 14 and FIG. 15 are diagrams of user interfaces in some other implementations according to this application;
FIG. 16(A) and FIG. 16(B) and FIG. 17(A) and FIG. 17(B) are diagrams of user interfaces in some other implementations according to this application;
FIG. 18(A) to FIG. 18(C) are diagrams of user interfaces in another implementation according to this application;
FIG. 19(A) and FIG. 19(B) are diagrams of user interfaces in another implementation according to this application;
FIG. 20(A) to FIG. 20(C) are diagrams of user interfaces in another implementation according to this application; and
FIG. 21A and FIG. 21B are a schematic flowchart of a display method according to this application.

### DESCRIPTION OF EMBODIMENTS

The following describes technical solutions of embodiments in this application with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of' means two or more than two.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

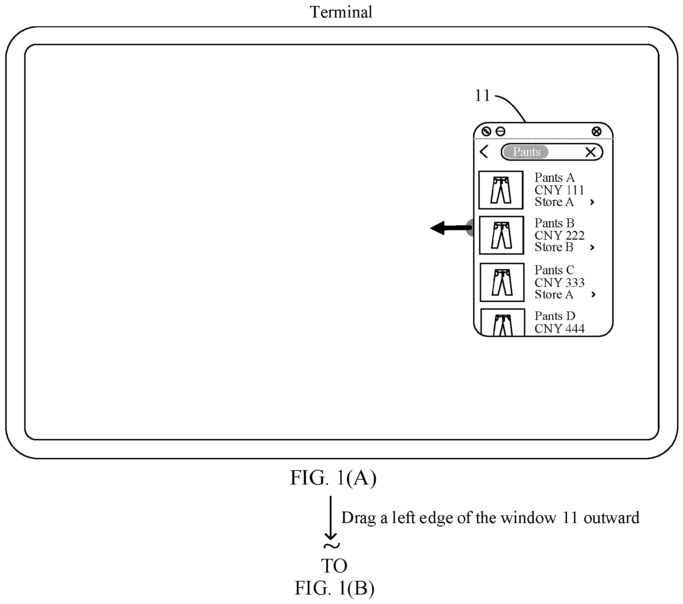

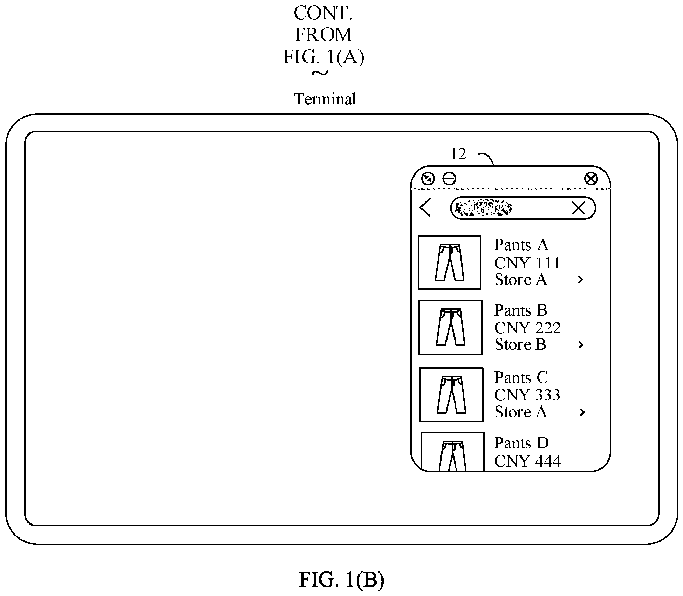

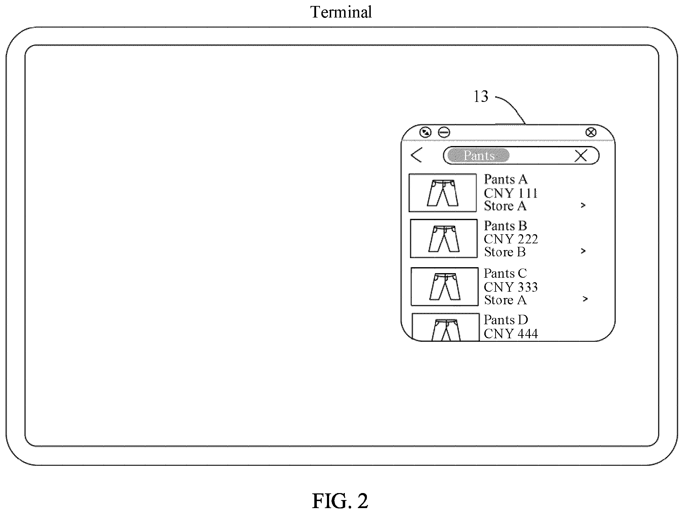

Currently, most windows displayed on a terminal are in a fixed layout. When a user stretches a window, the terminal usually zooms in or out (reduces or enlarges) the window proportionally. For a specific example, refer to FIG. 1(A) and FIG. 1(B). Alternatively, although the user may stretch the window horizontally or vertically, a case in which content such as a case in which a layout is disordered and content such as a picture is distorted may occur in a stretched window. For a specific example, refer to FIG. 2. The terminal cannot provide a resize (resize) function for zooming in or out randomly or dynamically changing a layout.

In some examples, as shown in FIG. 1(A), the terminal may display a window 11. The terminal may zoom in the window 11 proportionally in response to a user operation of dragging a left edge of the window 11 outward. For a zoomed-in window 11, refer to a window 12 shown in FIG. 1(B). It may be understood that content in the window 11 is also proportionally zoomed in or out (a ratio of a width to a height of a window obtained through proportionally zooming in or out is equal to a ratio of a width to a height of the window obtained before proportionally zooming in or out). When the window 11 is proportionally zoomed out, the content such as a text in the window 11 may not be clearly seen by the user, and visual experience is poor.

In some other examples, the terminal may alternatively zoom in the window 11 in response to a user operation of dragging the left edge of the window 11 shown in FIG. 1(A) outward. For a window 11 obtained through zooming in, refer to a window 13 shown in FIG. 2. It may be understood that, when the terminal randomly zooms in or out the window 11, a case in which content such as a picture in the window 13 shown in FIG. 2 is distorted may occur. This is not limited thereto. A case of layout disorder or the like may further occur, and more seriously, an application may even be unavailable. In this way, both a visual effect and operation experience are poor.

In other words, currently, the user cannot freely zoom in or out a display window based on a size of a screen of the terminal, and user experience of a window zooming function is not good.

This application provides a display method, applied to an electronic device. The electronic device may display a first viewing window, where the first viewing window includes a first window of a first application, and the first window is used to display a first interface of the first application. When detecting a user intention of zooming in or out the first viewing window, the electronic device may start an app multiplier mode of the first viewing window: displaying the first window and a second window of the first application (for displaying a second interface of the first application) in the first viewing window. The electronic device may further provide, in the app multiplier mode of the first viewing window, different variation effects of the first viewing window and/or a window in the first viewing window based on a user intention of zooming in or out the viewing window. In this way, a viewing window/window zooming function with good use experience is provided for a user, and a visual effect and operation experience are improved.

In this application, the electronic device may run at least one application, any application may include at least one application activity, and one application activity may correspond to one user interface (user interface, UI)/one window. In some examples, that the electronic device starts an app multiplier mode of the first viewing window includes: The electronic device starts a display manner in which an application activity is added, where the application activity corresponds to the second interface/second window of the first application. In some examples, in the app multiplier mode of the first viewing window of the first application, the first application may include an application activity corresponding to the first interface/first window and the application activity corresponding to the second interface/second window.

One viewing window may include at least one window, and one window is used to display one user interface. A window in the following embodiments may be replaced with a user interface. Similarly, a user interface in the following embodiments may also be replaced with a window.

For ease of description, an application program activity is referred to as an activity or an application activity for short in this application. The activity in this application may be an activity (Activity) in an Android (Android) system, or may be an application activity in another operating system like iOS. This is not limited in this application. The following embodiments are described by using an example in which an application activity is an activity in an Android system.

The activity is an interface for interaction between a user and an application in the Android system. The activity is used by the application to draw an interface. The activity may fill a screen or be smaller than a screen. The activity may float above another activity. For example, the activity corresponds to a floating window. The activity is an object that the user can visually interact with. The activity may be represented as a user interface. It may be understood that one activity corresponds to one user interface. One application may include a plurality of user interfaces, or it may be understood that one application may include a plurality of activities. When operating an application, a plurality of activities may be invoked to complete the requirements. Each activity may start another activity to perform different operations. For example, after starting an email application, the user may first access a main interface of the email application, and an activity corresponding to the main interface may start another activity to provide a user interface for executing tasks such as writing an email and opening an email.

A touch operation in this application may include but is not limited to a plurality of forms such as tap, double-tap, touch and hold, touch and hold with a single finger, touch and hold with a plurality of fingers, slide with a single finger, slide with a plurality of fingers, and slide with a knuckle. The touch operation in the slide form may be referred to as a slide operation for short. The slide operation is, for example, but is not limited to, sliding leftward or rightward, sliding up or down, or sliding to a first specific position. A track of the slide operation is not limited in this application. In an implementation, the touch operation may be performed on a second specific position on the electronic device. The specific position may be located on a display (or referred to as a screen) of the electronic device, for example, a position of a control like an icon or an edge of the display, or the specific position may be located on another position like a side or a back of the electronic device, for example, a position of a button like a volume button or a power button. The specific position is preset by the electronic device, or the specific position is determined by the electronic device in response to a user operation.

A drag operation in this application is a touch operation. A drag operation performed on/directed to a control may be an operation of keeping touching the control and sliding the control, for example, but not limited to a plurality of forms such as drag with a single finger, drag with a plurality of fingers, and drag with a knuckle. Similar to the slide operation, the drag operation is, for example, but is not limited to, dragging left or right, dragging up or down, or dragging to a specific position. A track of the drag operation is not limited in this application.

In this application, the electronic device may be a smart home device like a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), or a smart television, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, a smart city device, or the like. A specific type of the electronic device is not specifically limited in this application.

The following describes an example electronic device 100 according to an embodiment of this application.

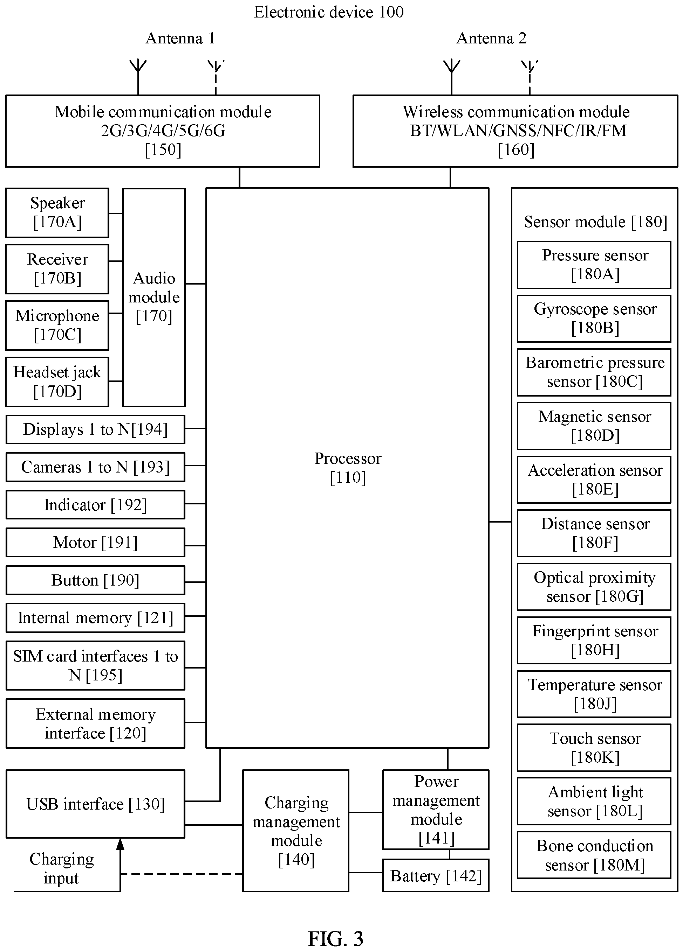

FIG. 3 is an example diagram of a hardware structure of the electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In an implementation, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In an implementation, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a solution that is applied to the electronic device 100 and that includes wireless communication such as 2G/3G/4G/5G/6G.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In an implementation, the modem processor may be an independent device. In another implementation, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In an implementation, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function through the GPU, the display 194, the application processor, and the like, for example, displays a viewing window of an application. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In an implementation, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In an implementation, the electronic device 100 may include one or N cameras 193, where N is a positive integer greater than 1.

The external memory interface 120 may be used to connect to an external storage card, for example, a micro SD card, to extend a storage capability of the electronic device 100. The internal memory 121 may be configured to store computer-executable program code. The executable program code includes instructions. The processor 110 runs the instructions stored in the internal memory 121 and/or the instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like. The audio module 170 is configured to convert digital audio information into an analog audio signal for output, and is also configured to convert an analog audio input into a digital audio signal. The audio module 170 may be further configured to encode and decode an audio signal. The speaker 170A, also referred to as a "loudspeaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal. In an implementation, the pressure sensor 180A may be disposed on the display 194. In another implementation, the pressure sensor 180A may alternatively be disposed on a surface of the electronic device 100, at a position different from that of the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In an implementation, touch operations that are performed at a same touch position but have different touch operation intensity may correspond to different operation instructions.

The gyroscope sensor 180B may be configured to determine a moving posture of the electronic device 100. In an implementation, an angular velocity of the electronic device 100 around three axes (namely, axes x, y, and z) may be determined by using the gyroscope sensor 180B. The barometric pressure sensor 180C is configured to measure barometric pressure. The magnetic sensor 180D includes a Hall sensor. The electronic device 100 may detect opening and closing of a flip cover by using the magnetic sensor 180D. The acceleration sensor 180E may detect accelerations in various directions (usually on three axes) of the electronic device 100. The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The electronic device 100 may use a feature of the collected fingerprint to implement fingerprint-based unlocking, application lock access, fingerprint-based image shooting, fingerprint-based call answering, and the like. The temperature sensor 180J is configured to detect a temperature.

The touch sensor 180K is also referred to as a "touch component". In an implementation, the touch sensor 180K may be disposed on the display 194, and the touch sensor 180K and the display 194 constitute a touchscreen, which is also referred to as a "touch screen". In another implementation, the touch sensor 180K may alternatively be disposed on a surface of the electronic device 100, at a position different from that of the display 194.

The touch sensor 180K and/or the pressure sensor 180A may be configured to detect a touch operation performed on or near the touch sensor 180K and/or the pressure sensor 180A, and may transfer the detected touch operation to the application processor, to determine a touch event type. In an implementation, the display 194 may provide a visual output related to the touch operation.

The bone conduction sensor 180M may obtain a vibration signal.

The button 190 includes a power button, a volume button, and the like. The motor 191 may generate a vibration prompt. The indicator 192 may be an indicator light, and may be configured to indicate a charging status and a state of charge change, or may be configured to indicate a message, a missed call, a notification, and the like. The SIM card interface 195 is configured to connect to a SIM card.

A software system of the electronic device 100 may use a layered architecture, an event-driven architecture, a microkernel architecture, a micro service architecture, or a cloud architecture. For example, a software system of the layered architecture may be an Android (Android) system, or may be a Harmony (Harmony) operating system (operating system, OS), or another software system. In embodiments of this application, the Android system of the layered architecture is used as an example to describe the software structure of the electronic device 100.

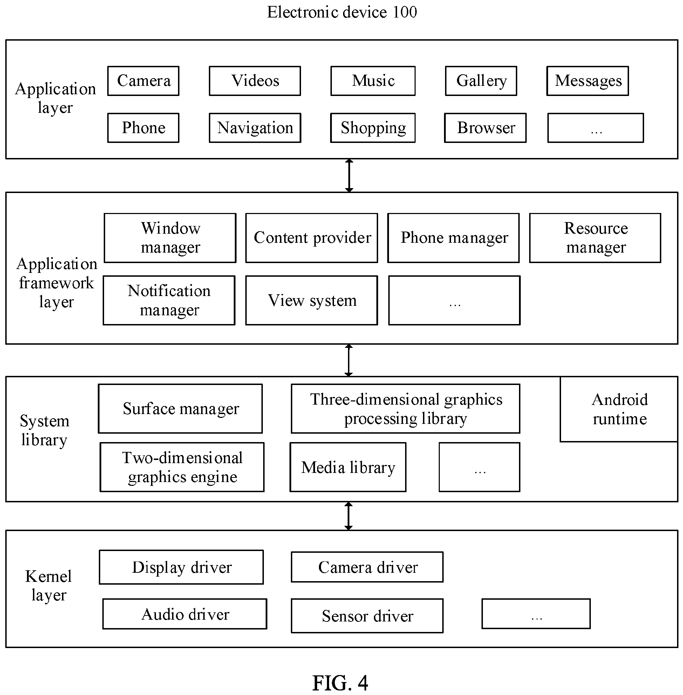

FIG. 4 is an example of a diagram of a software architecture of the electronic device 100.

In the layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Video, Music, Gallery, Messages, Phone, Navigation, Shopping, and Browser. This is not limited thereto. The application packages may be replaced with software in another form such as applets. This is not limited in this application.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and a bookmark, a phone book, and the like.

The view system includes visual controls such as a control for displaying a text and a control for displaying a picture. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The displayed notification information may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, the electronic device vibrates, or an indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to an application starting scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a control of a shopping application icon. A shopping application invokes an interface of the application framework layer to start the shopping application, and then invokes the kernel layer to start the display driver, so as to display a user interface of the shopping application through the display 194.

The following describes application scenarios in embodiments of this application and examples of user interfaces in the scenarios.

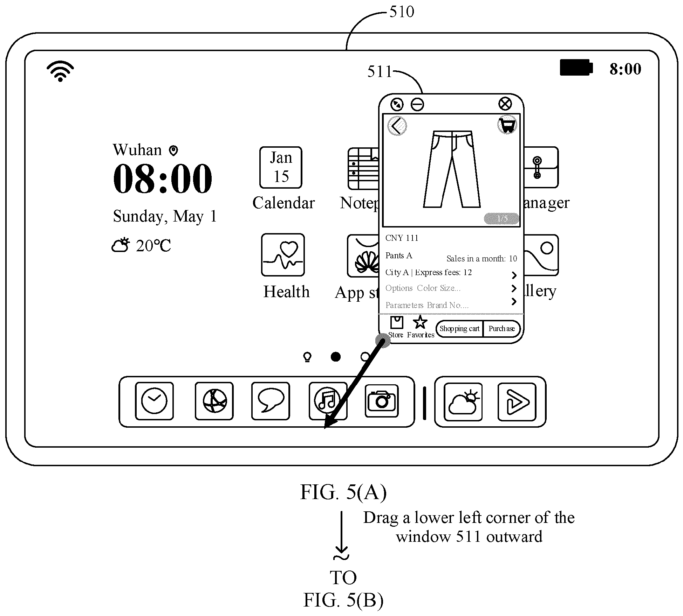

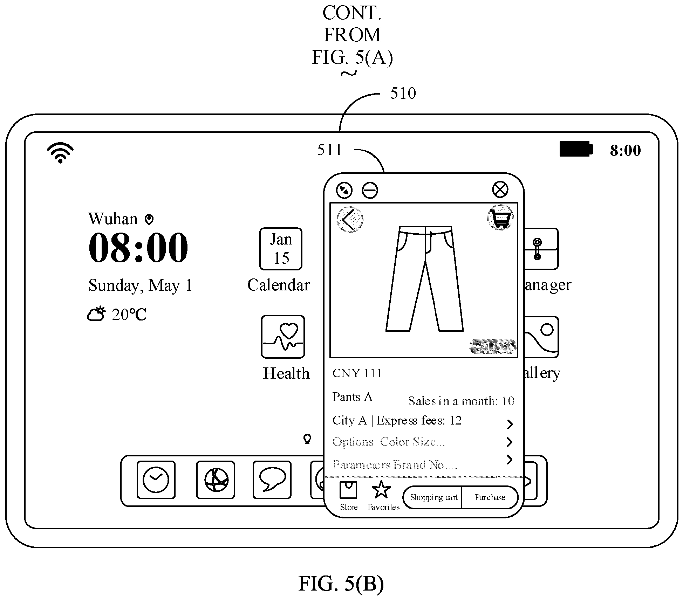

FIG. 5(A) and FIG. 5(B) are example diagrams of a user interface in which a viewing window is zoomed in or out.

As shown in FIG. 5(A), the electronic device 100 may display a desktop 510, and the desktop 510 may include a viewing window 511. In an implementation, the viewing window 511 may be configured to display a first interface of a shopping application of the electronic device 100. This is not limited thereto. In another implementation, the viewing window 511 may alternatively be configured to display a first interface of a shopping application displayed by an electronic device 200 connected to the electronic device 100. For example, the electronic device 100 is a tablet computer, and the electronic device 200 is a mobile phone. After a connection is established between the tablet computer and the mobile phone in a near field communication manner like Bluetooth, NFC, infrared, or Wi-Fi, a mobile phone viewing window (namely, the viewing window 511) may be displayed on the tablet computer in a mirrored manner. The mobile phone viewing window may display display content of an entire screen of the mobile phone. A user may operate the mobile phone on the tablet computer based on the mobile phone viewing window (for example, operate an application and a file on the mobile phone, view a notification message of the mobile phone, or make/answer a call). It may be understood that the tablet computer and the mobile phone implement multi-screen collaboration.

In an implementation, the electronic device 100 may receive a touch operation for the viewing window 511 shown in FIG. 5(A). For example, the touch operation is sliding outward. In FIG. 5(A), an example in which the touch operation is dragging a lower left corner of the viewing window 511 outward is used for illustration. The electronic device 100 may proportionally zoom in the viewing window 511 in response to the touch operation. For a viewing window 511 obtained through zooming in, refer to a viewing window 511 on the desktop 510 shown in FIG. 5(B). For example, the viewing window 511 shown in FIG. 5(B) is a maximum viewing window that can be obtained through proportionally zooming in.

In an implementation, the electronic device 100 may alternatively receive a touch operation for the viewing window 511 shown in FIG. 5(B). For example, the touch operation is sliding inward. It is assumed that the touch operation is dragging a lower left corner of the viewing window 511 inward. The electronic device 100 may proportionally zoom out the viewing window 511 in response to the touch operation. For a viewing window 511 obtained through zooming out, refer to the viewing window 511 shown in FIG. 5(A).

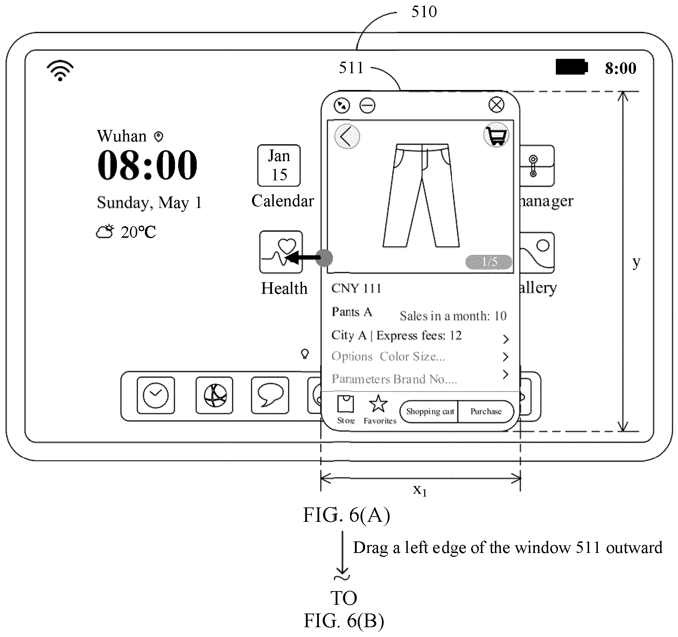

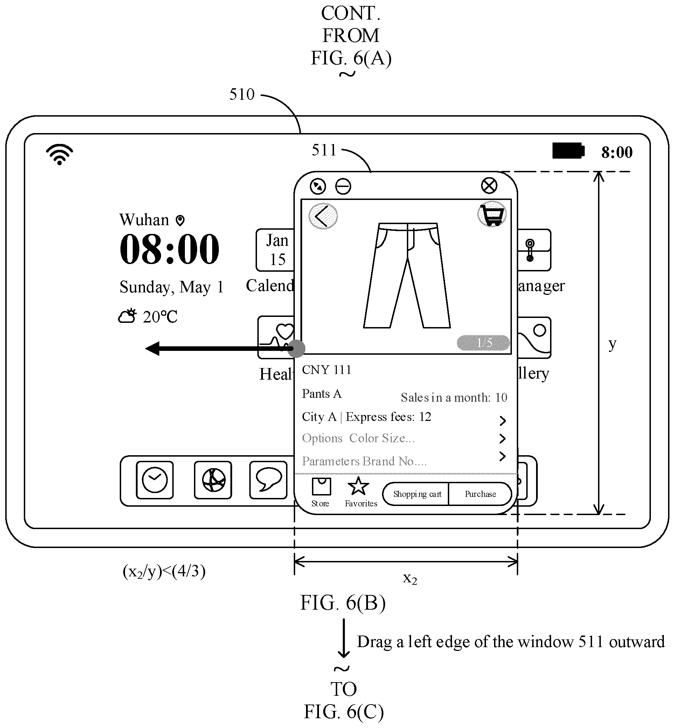

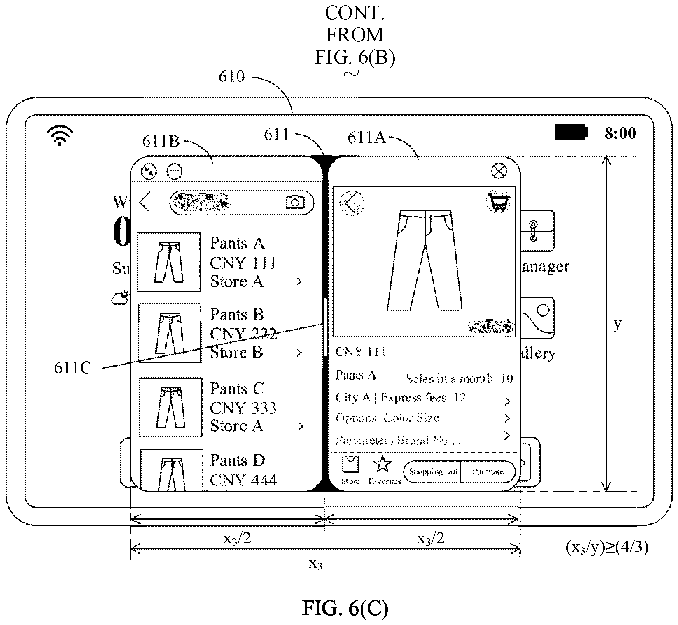

In an implementation, after the implementations shown in FIG. 5(A) and FIG. 5(B) are performed, the electronic device 100 may receive a touch operation for the viewing window 511 shown in FIG. 5(B). For example, the touch operation is sliding outward. In FIG. 6(A), an example in which the touch operation is dragging a left edge of the viewing window 511 outward is used for illustration. The electronic device 100 may widen, in response to the touch operation, the viewing window 511 shown in FIG. 6(A). When the viewing window 511 is widened, a width *x*₁ of the viewing window 511 may be increased, and a height y of the viewing window 511 may remain unchanged or may be changed (in FIG. 6(A) to FIG. 6(C), an example in which the height y remains unchanged is used for description), where *xᵢ* and y are positive numbers, and i is a positive integer. When a ratio of a width to a height of a viewing window 511 obtained through widening is less than a preset ratio, for example, when a ratio of a width *x*₂ to the height y of the viewing window 511 shown in FIG. 6(B) is (*x*₂/y)<(4/3), the viewing window 511 may still display the first interface of the shopping application. In an implementation, the user may continue to widen the viewing window 511 shown in FIG. 6(B). In FIG. 6(B), an example in which the user drags a left edge of the viewing window 511 outward is used for illustration. When a ratio of a width to a height of a viewing window 511 obtained through widening is greater than or equal to the preset ratio, for example, a ratio of a width *x*₃ to the height y of a viewing window 611 on a desktop 610 shown in FIG. 6(C) is (*x*₃/y)≥(4/3), an app multiplier mode of the viewing window 511 may be started. The preset ratio may be determined by the electronic device 100 based on an optimal display effect of the application.

As shown in FIG. 6(C), the viewing window 611 may include a first interface 611A displayed in the viewing window 511 shown in FIG. 5(B) and a newly added second interface 611B. In some examples, the newly added second interface 611B is a previous-level interface of the first interface 611A, and is not limited thereto. In some other examples, the newly added second interface 611B may alternatively be any user interface that is other than a previous-level interface and that is displayed by the electronic device before the first interface 611A, for example, a first opened application interface, for example, a main interface of an application. In some other examples, the newly added second interface 611B may alternatively be a next-level interface of the first interface 611A. Content/A type of the newly added second interface is not limited in this application. In some examples, a width of the viewing window 611 is *x*₃, and widths of the first interface 611A and the second interface 611B in the viewing window 611 may be equal, that is, both are *x*₃/2 As shown in FIG. 6(C), the viewing window 611 further includes a drag bar 611C located between the first interface 611A and the second interface 611B. The drag bar 611C may be used to adjust a proportion of the first interface 611A and the second interface 611B in the viewing window 611.

This is not limited to the foregoing examples. In some other examples, after displaying the viewing window 511 shown in FIG. 6(A), the electronic device 100 may directly display, based on a user intention, the viewing window 611 shown in FIG. 6(C), and does not display the viewing window 511 shown in FIG. 6(B). For example, when detecting that the user intention is to zoom in the viewing window 511 shown in FIG. 6(A) to a target size, the electronic device 100 may directly set a size parameter of the viewing window 511 to the target size, namely, a size of the viewing window 611 shown in FIG. 6(C).

This is not limited to the foregoing examples. In some other examples, a width of the first interface 611A in the viewing window 611 shown in FIG. 6(C) is greater than a width of the second interface 611B, and/or the width of the first interface 611A in the viewing window 611 shown in FIG. 6(C) is greater than the width of the viewing window 511 shown in FIG. 6(A).

The implementations shown in FIG. 6(A) to FIG. 6(C) may be understood as follows: When receiving a touch operation of dragging an edge of the viewing window 511 outward, the electronic device 100 may intelligently determine an optimal display effect of the application in the viewing window 511, and when a ratio of a width to a height of the viewing window 511 is greater than or equal to the preset ratio, the app multiplier mode of the viewing window 511 may be started. Even if the electronic device 100 cannot provide a resize function of the viewing window 511, a viewing window zooming function with a good visual effect and good operation experience may be provided for the user in combination with an app multiplier. This greatly improves use experience of the user.

This is not limited to the foregoing examples. In some other examples, the implementations shown in FIG. 6(A) to FIG. 6(C) may not be performed after the implementations shown in FIG. 5(A) and FIG. 5(B). The electronic device 100 may perform the implementations shown in FIG. 6(A) to FIG. 6(C) when displaying any viewing window (for displaying an interface of an application). This is not limited in this application.

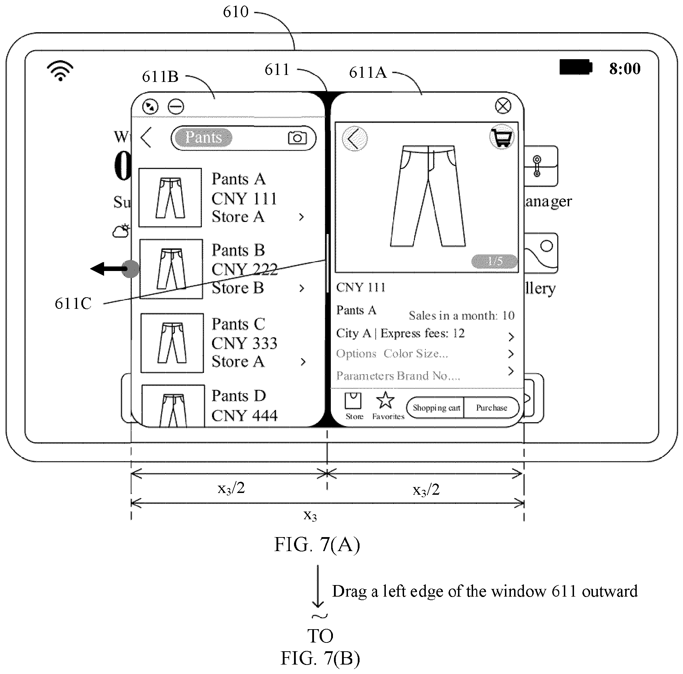

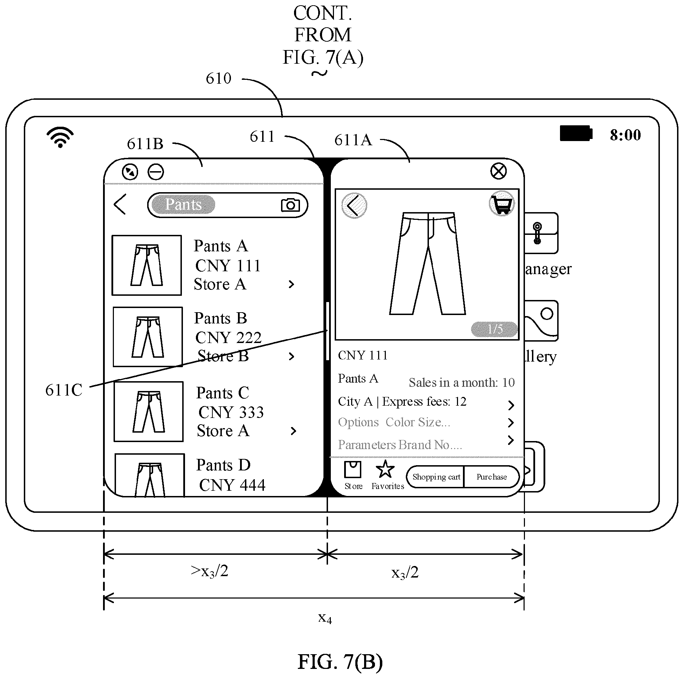

In an implementation, after the implementations shown in FIG. 6(A) to FIG. 6(C) are performed, the electronic device 100 may receive a touch operation for the viewing window 611 shown in FIG. 6(C). For example, the touch operation is sliding outward. In FIG. 7(A), an example in which the touch operation is dragging a left edge of the viewing window 611 outward is used for illustration. The second interface 611B is displayed at a left side of the viewing window 611, and the touch operation may be understood as a user operation for the second interface 611B located at the left side of the viewing window 611. The electronic device 100 may widen, in response to the touch operation, the viewing window 611 (with the width *x*₃) shown in FIG. 7(A). For example, the electronic device 100 may specifically widen the second interface 611B (with the width *x*₃/2) located at the left side of the viewing window 611. For a viewing window 611 obtained through widening, refer to a viewing window 611 on the desktop 610 shown in FIG. 7(B). As shown in FIG. 7(B), a width *x*₄ of the viewing window 611 is greater than *x*₃, a width of the first interface 611A in the viewing window 611 is still *x*₃/2, and a width of the second interface 611B in the viewing window 611 is greater than *x*₃/2. An area of the viewing window 611 shown in FIG. 7(B) is greater than an area of the viewing window 611 shown in FIG. 7(A), an area of the first interface 611A shown in FIG. 7(B) is the same as an area of the first interface 611A shown in FIG. 7(A), and an area of the second interface 611B shown in FIG. 7(B) is greater than an area of the second interface 611B shown in FIG. 7(A).

The implementations shown in FIG. 7(A) and FIG. 7(B) may be understood as follows: When receiving the touch operation of dragging the left edge of the viewing window 611 outward, the electronic device 100 may increase the width of the second interface 611B located at the left side of the viewing window 611 (an overall width of the viewing window 611 is also increased), so that two user interfaces in the viewing window 611 have a left-wide and right-narrow display effect, and the viewing window display effect complies with a viewing window zooming operation performed by the user. This provides the user with an effective and user-friendly viewing window zooming function.

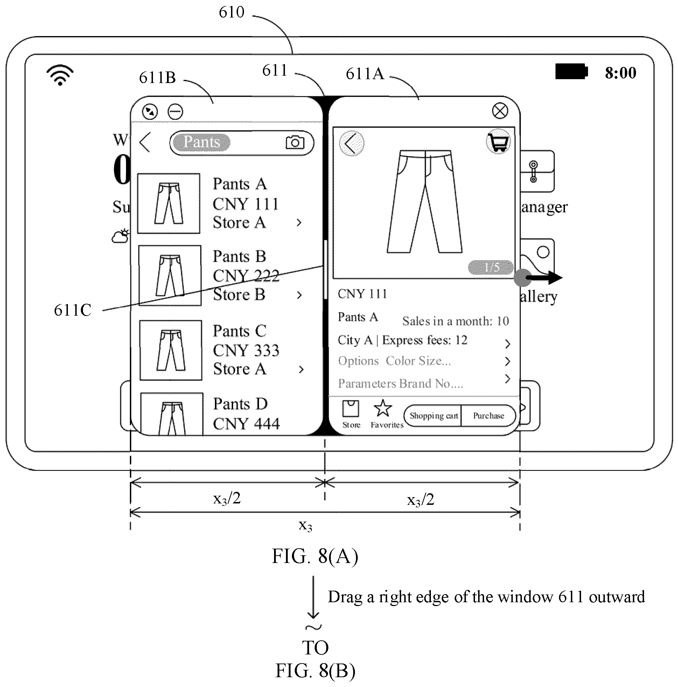

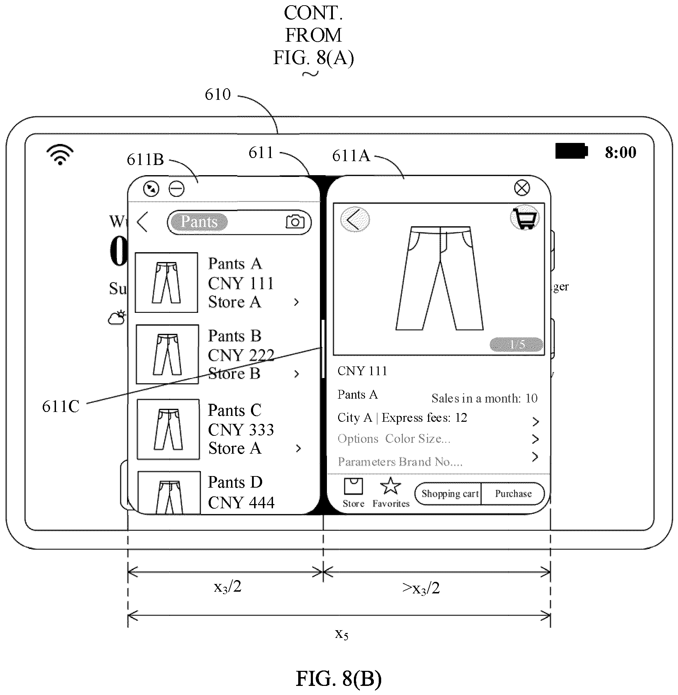

In an implementation, after the implementations shown in FIG. 6(A) to FIG. 6(C) are performed, the electronic device 100 may receive a touch operation for the viewing window 611 shown in FIG. 6(C). For example, the touch operation is sliding outward. In FIG. 8(A), an example in which the touch operation is dragging a right edge of the viewing window 611 outward is used for illustration. The first interface 611A is displayed at a right side of the viewing window 611, and the touch operation may be understood as a user operation for the first interface 611A located at the right side of the viewing window 611. The electronic device 100 may widen, in response to the touch operation, the viewing window 611 (with the width *x*₃) shown in FIG. 8(A). For example, the electronic device 100 may specifically widen the first interface 611A (with the width *x*₃/2) located at the right side of the viewing window 611. For a viewing window 611 obtained through widening, refer to a viewing window 611 on the desktop 610 shown in FIG. 8(B). As shown in FIG. 8(B), a width *x*₅ of the viewing window 611 is greater than *x*₃, a width of the first interface 611A in the viewing window 611 is greater than *x*₃/2, and a width of the second interface 611B in the viewing window 611 is still *x*₃/2. An area of the viewing window 611 shown in FIG. 8(B) is greater than an area of the viewing window 611 shown in FIG. 8(A), an area of the first interface 611A shown in FIG. 8(B) is greater than an area of the first interface 611A shown in FIG. 8(A), and an area of the second interface 611B shown in FIG. 8(B) is the same as an area of the second interface 611B shown in FIG. 8(A).

The implementations shown in FIG. 8(A) and FIG. 8(B) may be understood as follows: When receiving the touch operation of dragging the right edge of the viewing window 611 outward, the electronic device 100 may increase the width of the first interface 611A located at the right side of the viewing window 611 (the overall width of the viewing window 611 is also increased), so that two user interfaces in the viewing window 611 have a left-narrow and right-wide display effect, and the viewing window display effect complies with a viewing window zooming operation performed by the user. This provides the user with an effective and user-friendly viewing window zooming function.

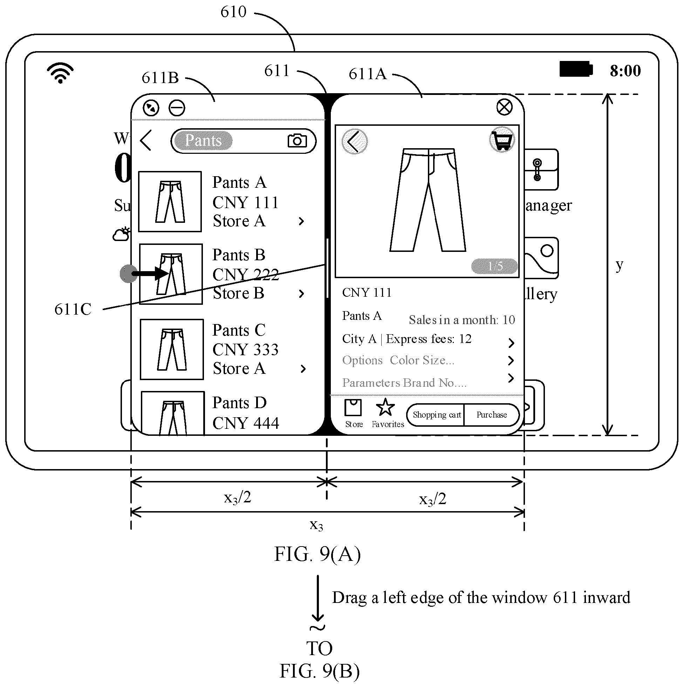

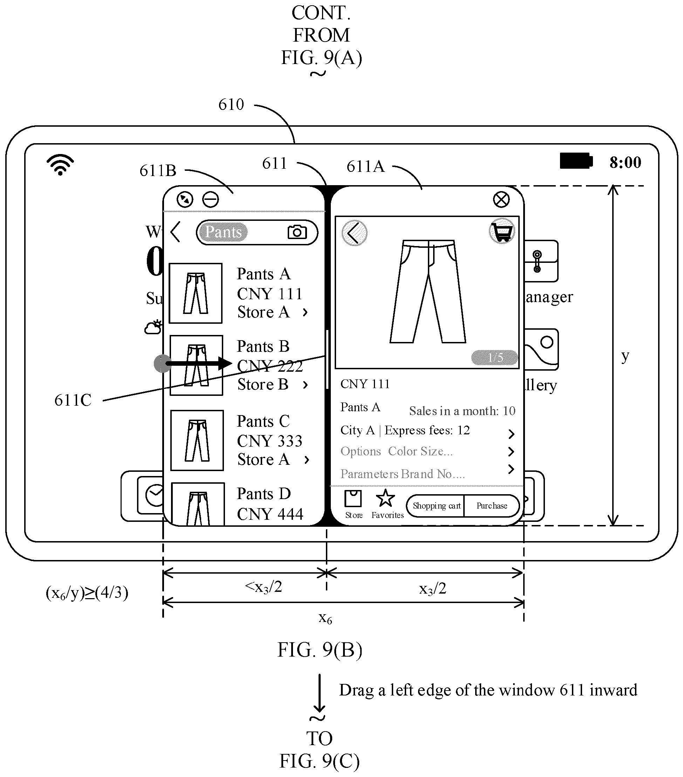

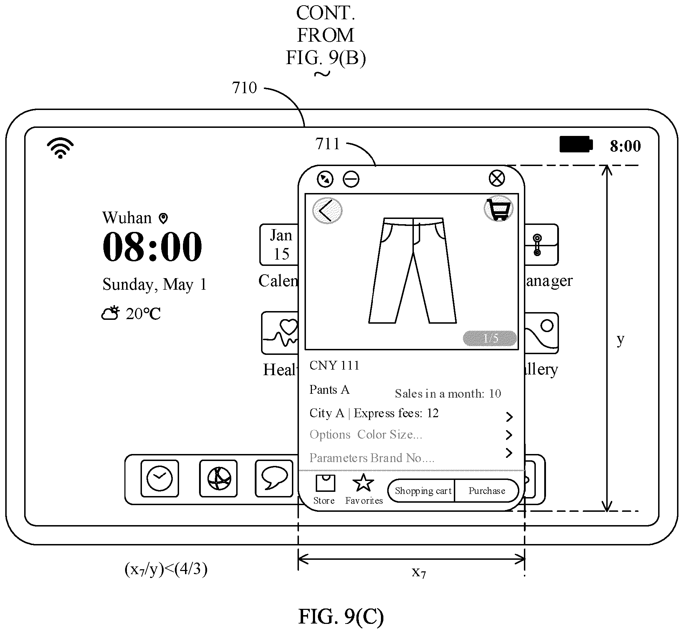

In an implementation, after the implementations shown in FIG. 6(A) to FIG. 6(C) are performed, the electronic device 100 may receive a touch operation for the viewing window 611 shown in FIG. 6(C). For example, the touch operation is sliding inward. In FIG. 9(A), an example in which the touch operation is dragging a left edge of the viewing window 611 inward is used for illustration. The second interface 611B is displayed at a left side of the viewing window 611, and the touch operation may be understood as a user operation for the second interface 611B located at the left side of the viewing window 611. The electronic device 100 may narrow, in response to the touch operation, the viewing window 611 (with the width *x*₃) shown in FIG. 9(A). When the viewing window 611 is narrowed, the width *x*₃ of the viewing window 611 may be decreased, and the height y may remain unchanged or may be changed (in FIG. 9(A) to FIG. 9(C), an example in which the height y remains unchanged is used for description). For example, the electronic device 100 may specifically narrow the second interface 611B located at the left side of the viewing window 611. When a ratio of a width to a height of a viewing window 611 obtained through narrowing is greater than or equal to the preset ratio, for example, a ratio of a width *x*₆ to the height y of a viewing window 611 shown in FIG. 9(B) is (*x*₆/y)≥(4/3), the viewing window 611 may still be run in the app multiplier mode. In other words, both the first interface 611A and the second interface 611B of the shopping application are displayed. As shown in FIG. 9(B), the width *x*₆ of the viewing window 611 is less than x₃, a width of the first interface 611A in the viewing window 611 is still *x*₃/2, and a width of the second interface 611B in the viewing window 611 is less than *x*₃/2. An area of the viewing window 611 shown in FIG. 9(B) is less than an area of the viewing window 611 shown in FIG. 9(A), an area of the first interface 611A shown in FIG. 9(B) is the same as an area of the first interface 611A shown in FIG. 9(A), and an area of the second interface 611B shown in FIG. 9(B) is less than an area of the second interface 611B shown in FIG. 9(A). In an implementation, the user may continue to narrow the viewing window 611 shown in FIG. 9(B). In FIG. 9(B), an example in which the user drags a left edge of the viewing window 611 inward is used for illustration. When a ratio of a width to a height of a viewing window 611 obtained through narrowing is less than the preset ratio, for example, a ratio of a width *x*₇ to the height y of a viewing window 711 on a desktop 710 shown in FIG. 9(C) is (*x*₇/y)<(4/3), the app multiplier mode of the viewing window 611 may be ended. The viewing window 711 includes only the first interface 611A of the shopping application, and does not include the second interface 611B of the shopping application.

The implementations shown in FIG. 9(A) to FIG. 9(C) may be understood as follows: When receiving a touch operation of dragging an edge of the viewing window 611 (in the app multiplier mode) inward, the electronic device 100 may decrease a width of a user interface corresponding to the touch operation in the viewing window 611 (the overall width of the viewing window 611 is also decreased). In this way, a viewing window display effect complies with a viewing window zooming operation performed by the user. In addition, the electronic device may intelligently determine an optimal display effect of an application in the viewing window 611. When a ratio of a width to a height of the viewing window 611 is less than the preset ratio, the app multiplier mode of the viewing window 611 may be ended. In other words, the app multiplier mode is flexibly started and ended based on a zooming operation performed by the user, to provide the user with an effective and user-friendly viewing window zooming function.

In an implementation, the electronic device 100 may alternatively specifically narrow, in response to a user operation of dragging a right edge of the viewing window 611 shown in FIG. 6(C) inward, the first interface 611A located at a right side of the viewing window 611. When a ratio of a width to a height of a viewing window 611 obtained through narrowing is greater than or equal to the preset ratio, the viewing window 611 may still be run in the app multiplier mode. In this case, two user interfaces in the viewing window 611 have a left-wide and right-narrow display effect. In an implementation, when the ratio of the width to the height of the viewing window 611 obtained through narrowing is less than the preset ratio, the app multiplier mode of the viewing window 611 may be ended, and only the second interface 611B located at a left side of the viewing window 611 is displayed. With reference to the implementations shown in FIG. 9(A) to FIG. 9(C), it may be understood that a user interface is displayed after an app multiplier mode of a viewing window is determined to be ended based on a user operation. This is not limited thereto. In another implementation, a user interface with a higher level may be displayed after the app multiplier mode of the viewing window is ended by default. For example, the second interface 611B in the viewing window 611 is a previous-level interface of the first interface 611A, and the electronic device 100 may display, by default, the first interface 611A with a higher level after the app multiplier mode of the viewing window 611 is ended. A manner of determining a user interface displayed after the app multiplier mode of the viewing window is ended is not limited in this application.

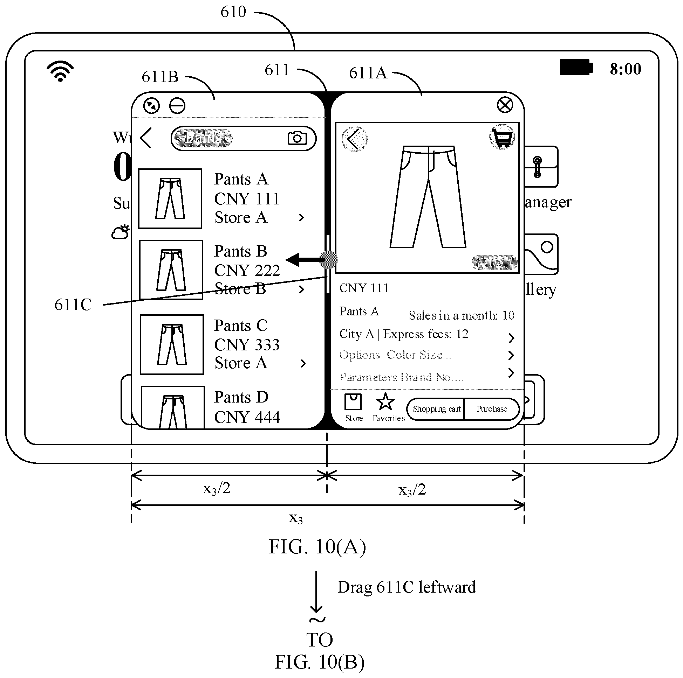

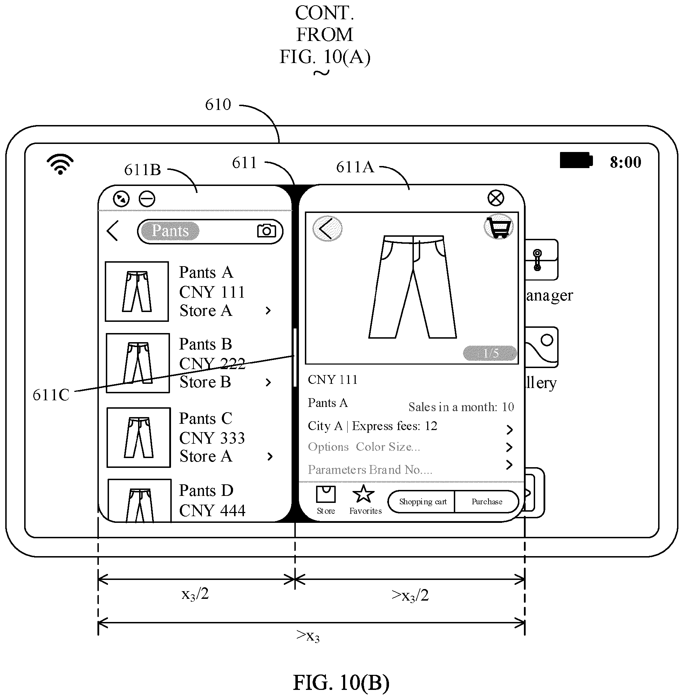

In an implementation, after the implementations shown in FIG. 6(A) to FIG. 6(C) are performed, the electronic device 100 may receive a touch operation for the drag bar 611C in the viewing window 611 shown in FIG. 6(C). For example, the touch operation is sliding leftward or rightward. In FIG. 10(A), an example in which the touch operation is dragging the drag bar 611C leftward is used for illustration. The first interface 611A is displayed at a right side of the viewing window 611, and the touch operation may be understood as a user operation of dragging a left edge of the first interface 611A outward. The electronic device 100 may widen, in response to the touch operation, the viewing window 611 shown in FIG. 10(A). For example, the electronic device 100 may specifically widen the first interface 611A located at the right side of the viewing window 611. For a viewing window 611 obtained through widening, refer to a viewing window 611 on the desktop 610 shown in FIG. 10(B). Descriptions of the viewing window 611 shown in FIG. 10(B), the first interface 611A in the viewing window 611, and the second interface 611B in the viewing window 611 are similar to the descriptions of those in FIG. 8(B). For details, refer to the descriptions of FIG. 8(B).

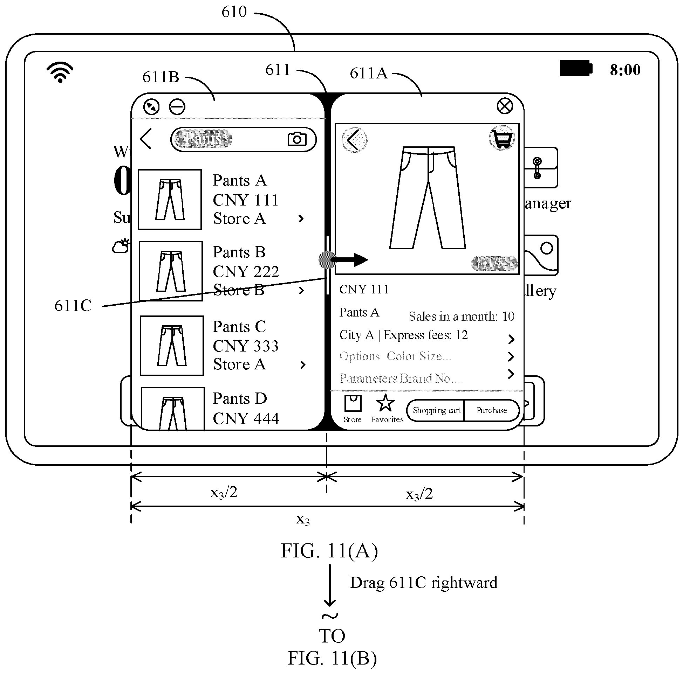

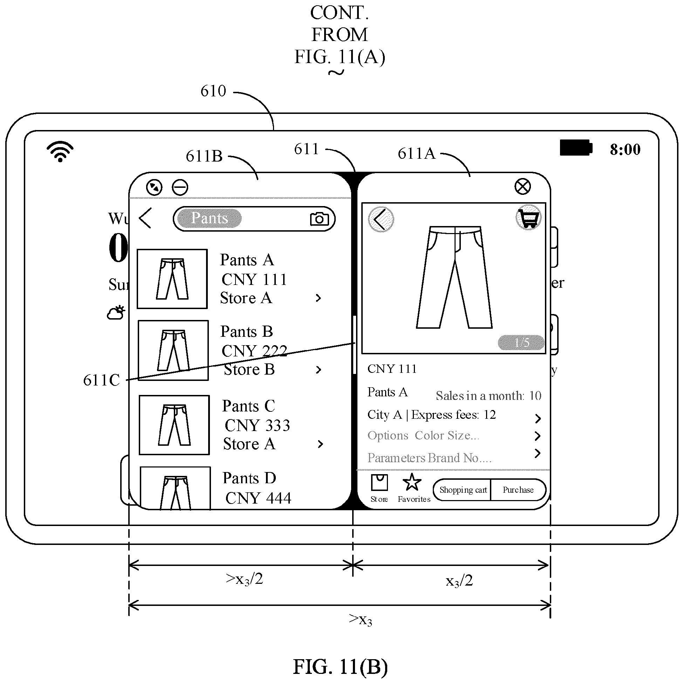

In an implementation, after the implementations shown in FIG. 6(A) to FIG. 6(C) are performed, the electronic device 100 may receive a touch operation for the drag bar 611C in the viewing window 611 shown in FIG. 6(C). For example, the touch operation is sliding leftward or rightward. In FIG. 11(A), an example in which the touch operation is dragging the drag bar 611C rightward is used for illustration. The second interface 611B is displayed at a left side of the viewing window 611, and the touch operation may be understood as a user operation of dragging a right edge of the second interface 611B outward. The electronic device 100 may widen, in response to the touch operation, the viewing window 611 shown in FIG. 11(A). For example, the electronic device 100 may specifically widen the second interface 611B located at the left side of the viewing window 611. For a viewing window 611 obtained through widening, refer to a viewing window 611 on the desktop 610 shown in FIG. 11(B). Descriptions of the viewing window 611 shown in FIG. 11(B), the first interface 611A in the viewing window 611, and the second interface 611B in the viewing window 611 are similar to the descriptions of those in FIG. 7(B). For details, refer to the descriptions of FIG. 7(B).

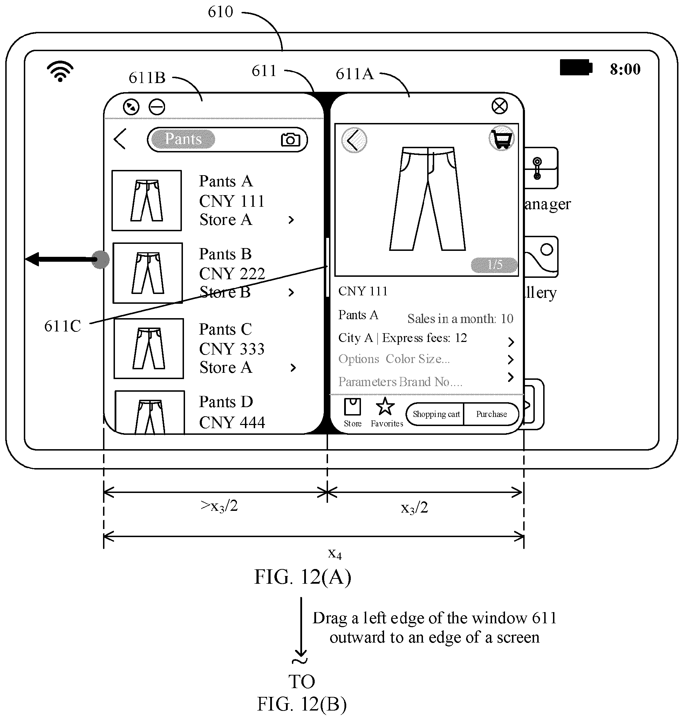

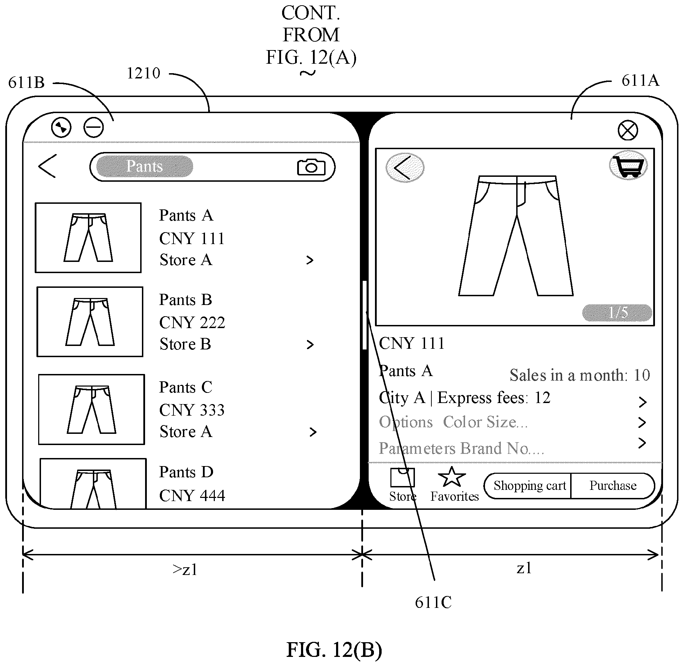

In an implementation, after the implementations shown in FIG. 7(A) and FIG. 7(B) or FIG. 11(A) and FIG. 11(B) are performed, the electronic device 100 may display the desktop 610 shown in FIG. 12(A). On the desktop 610, the width of the first interface 611A is less than the width of the second interface 611B in the viewing window 611. The electronic device 100 may receive a touch operation for the viewing window 611. For example, the touch operation is sliding outward. In FIG. 12(A), an example in which the touch operation is dragging the left edge of the viewing window 611 outward to an edge of a screen of the electronic device 100 is used for illustration. The electronic device 100 may display the viewing window 611 in full screen in response to the touch operation. For details, refer to a user interface 1210 shown in FIG. 12(B). As shown in FIG. 12(B), the user interface 1210 may include the first interface 611A and the second interface 611B in the viewing window 611, and the drag bar 611C located between the first interface 611A and the second interface 611B. A width *z*₁ of the first interface 611A is less than a width of the second interface 611B in the user interface 1210, where *zⱼ* is a positive number, and j is a positive integer. An area of the first interface 611A is less than an area of the second interface 611B in the user interface 1210. The width of the first interface 611A in the user interface 1210 is greater than the width of the first interface 611A in the viewing window 611, and the width of the second interface 611B in the user interface 1210 is greater than the width of the second interface 611B in the viewing window 611.

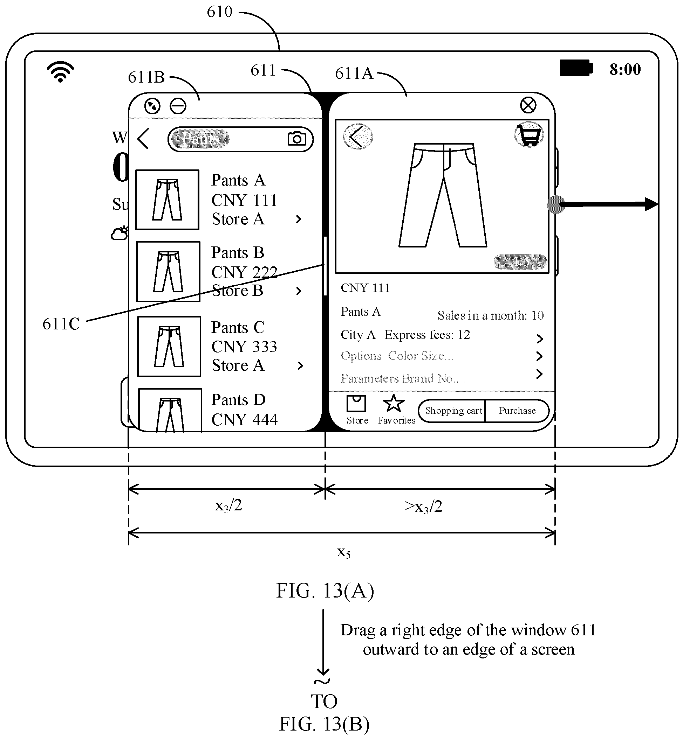

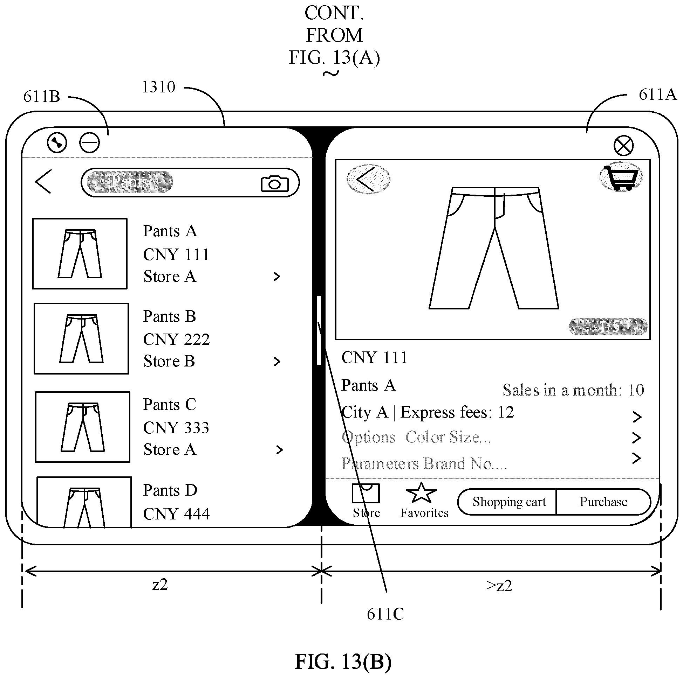

In an implementation, after the implementations shown in FIG. 8(A) and FIG. 8(B) or FIG. 10(A) and FIG. 10(B) are performed, the electronic device 100 may display the desktop 610 shown in FIG. 13(A). On the desktop 610, the width of the first interface 611A is greater than the width of the second interface 611B in the viewing window 611. The electronic device 100 may receive a touch operation for the viewing window 611. For example, the touch operation is sliding outward. In FIG. 13(A), an example in which the touch operation is dragging the right edge of the viewing window 611 outward to an edge of a screen of the electronic device 100 is used for illustration. The electronic device 100 may display the viewing window 611 in full screen in response to the touch operation. For details, refer to a user interface 1310 shown in FIG. 13(B). As shown in FIG. 13(B), the user interface 1310 may include the first interface 611A and the second interface 611B in the viewing window 611, and the drag bar 611C located between the first interface 611A and the second interface 611B. A width *z*₂ of the second interface 611B is less than a width of the first interface 611A in the user interface 1310. An area of the second interface 611B is less than an area of the first interface 611A in the user interface 1310. The width of the first interface 611A in the user interface 1310 is greater than the width of the first interface 611A in the viewing window 611, and the width of the second interface 611B in the user interface 1310 is greater than the width of the second interface 611B in the viewing window 611.

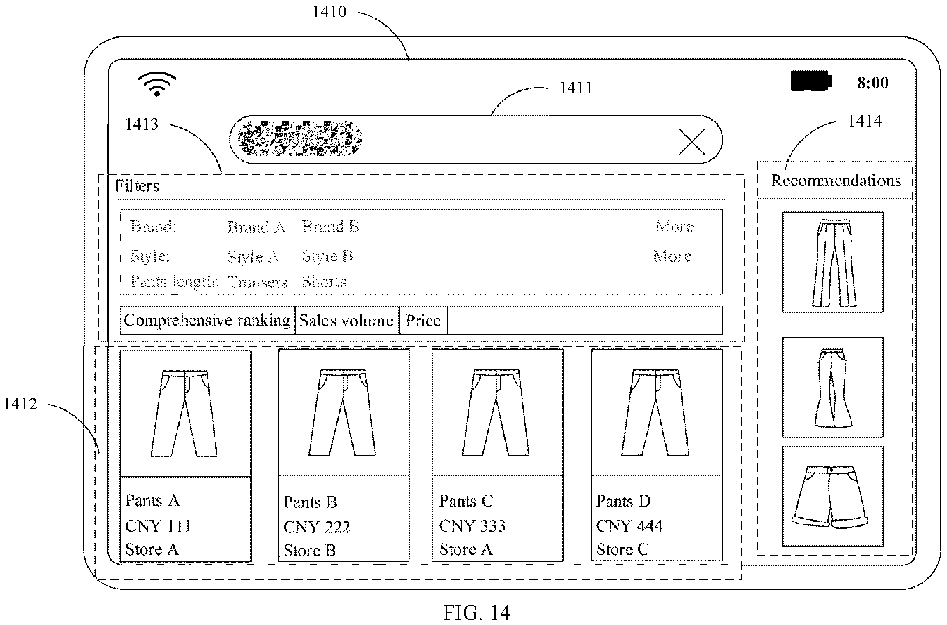

This is not limited to the implementations shown in FIG. 12(A) and FIG. 12(B). In another implementation, the electronic device 100 may display, in full screen in response to the touch operation (dragging the left edge of the viewing window 611 outward to the edge of the screen of the electronic device 100) shown in FIG. 12(A), the second interface 611B located at the left side of the viewing window 611. For details, refer to a user interface 1410 shown in FIG. 14. As shown in FIG. 14, both the user interface 1410 and the second interface 611B shown in FIG. 12(A) are search interfaces of the shopping application. The user interface 1410 includes content in the second interface 611B: a search box 1411 and a search result list 1412. In addition, the user interface 1410 further includes content that is not in the second interface 611B: filtering information 1413 and recommendation information 1414 that are of search results. In this way, a display effect obtained when the second interface 611B is displayed in full screen can be ensured, and user experience is improved. This is not limited thereto. In some other examples, the second interface 611B may be displayed in full screen in another manner. For example, the content that is not in the second interface 611B is not displayed. This is not limited in this application.

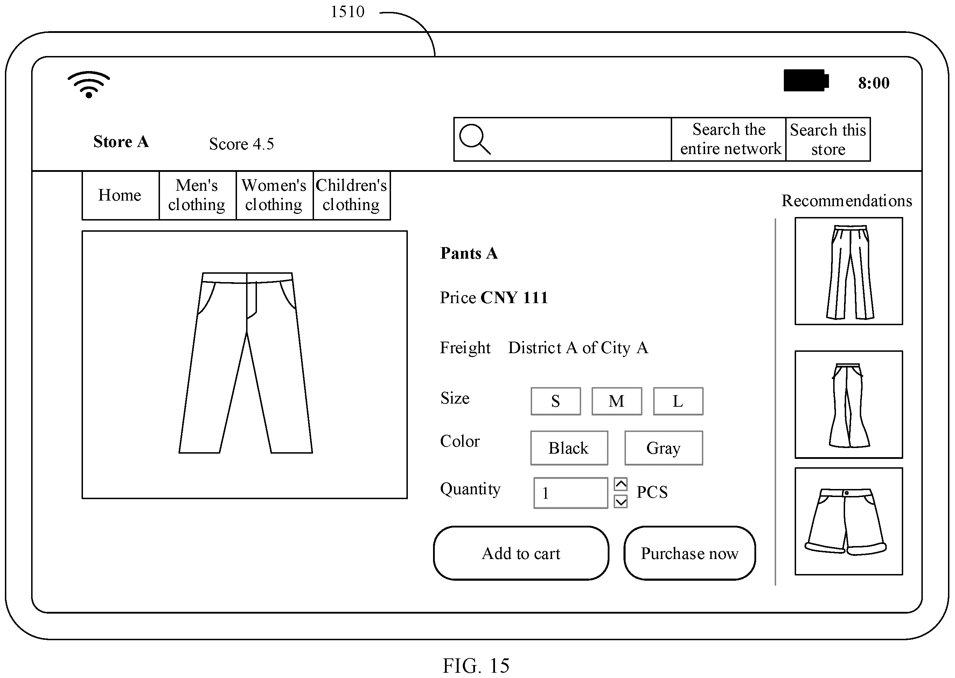

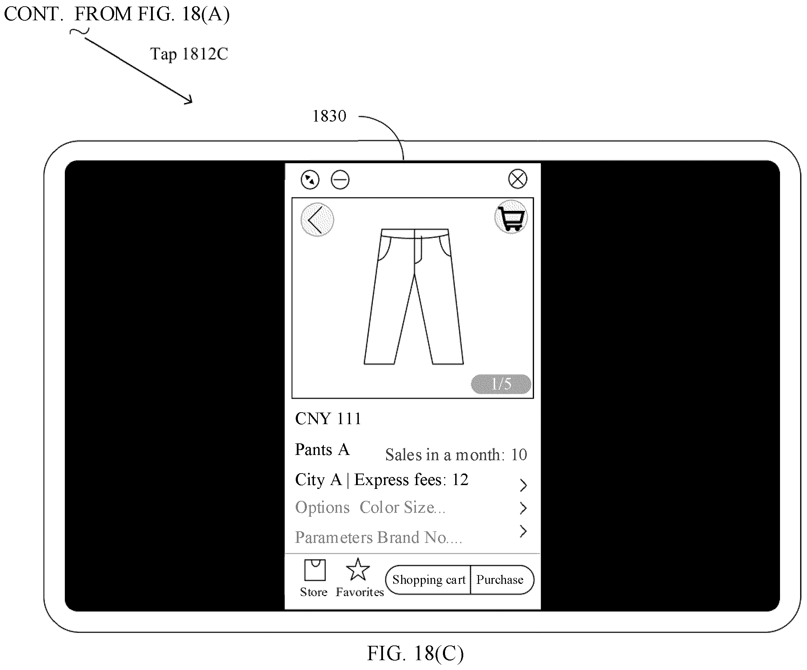

This is not limited to the implementations shown in FIG. 13(A) and FIG. 13(B). In another implementation, the electronic device 100 may display, in full screen in response to the touch operation (dragging the right edge of the viewing window 611 outward to the edge of the screen of the electronic device 100) shown in FIG. 13(A), the first interface 611A located at the right side of the viewing window 611. For details, refer to a user interface 1510 shown in FIG. 15. As shown in FIG. 15, both the user interface 1510 and the first interface 611A shown in FIG. 12(A) are offering details interfaces, but the user interface 1410 not only includes content in the second interface 611B, but also includes content that is not in the second interface 611B. In this way, a display effect obtained when the first interface 611A is displayed in full screen can be ensured, and user experience is improved. This is not limited thereto. In some other examples, the first interface 611A may be displayed in full screen in another manner. For example, a user interface 1830 shown in FIG. 18(C) is displayed. This is not limited in this application.

This is not limited to the implementations shown in FIG. 12(A) and FIG. 12(B) and FIG. 13(A) and FIG. 13(B). In another implementation, the electronic device 100 may alternatively display the viewing window 611 in full screen in response to the user operation of dragging the right edge of the viewing window 611 shown in FIG. 12(A) outward to the edge of the screen of the electronic device 100, and a width of the first interface 611A located at a right side is greater than or equal to a width of the second interface 611B located at a left side in the viewing window 611 displayed in full screen. This is not limited thereto. In another implementation, the electronic device 100 may determine a width of stretching a viewing window based on the drag distance of a drag operation. It is assumed that a drag distance corresponding to the user operation is short. Therefore, in a viewing window 611 displayed in full screen by the electronic device 100 in response to the touch operation, a width of the first interface 611A located at a right side is still less than a width of the second interface 611B located at a left side. However, in this case, a ratio of the width of the first interface 611A to the width of the second interface 611B is greater than a ratio of the width of the first interface 611A to the width of the second interface 611B shown in FIG. 12(A). Other cases are similar. Details are not described again.

The implementations shown in FIG. 14 and FIG. 15 may be understood as determining, based on a user operation, a user interface displayed in full screen. This is not limited thereto. In another implementation, a user interface with a higher level may be displayed in full screen by default. A manner of determining a user interface displayed in full screen is not limited in this application.

This is not limited to the touch operation for zooming in or out a viewing window in the foregoing implementations. In another implementation, zooming in or out a viewing window may be triggered by using a user operation in another form. In some examples, the electronic device 100 may zoom in the viewing window 611 (but not display the viewing window 611 in full screen) in response to the touch operation shown in FIG. 12(A), or the electronic device 100 may display the viewing window 611 in full screen in response to a user operation of dragging an edge of the viewing window 611 shown in FIG. 12(A) outward to a corner of the screen of the electronic device 100. In some examples, the electronic device 100 may zoom out the viewing window 611 (but does not end the app multiplier mode of the viewing window 611) in response to the touch operation shown in FIG. 9(A), or the electronic device 100 may end the app multiplier mode of the viewing window 611, for example, display the viewing window 711 shown in FIG. 9(C), in response to a user operation of dragging an edge corner of the viewing window 611 shown in FIG. 9(A) inward. This is not limited thereto. In some other examples, the viewing window may alternatively be zoomed in or out by using a user operation like a slide operation in another form like two-finger sliding, a voice input, or a gesture operation. A user operation used to zoom in or out a viewing window is not limited in this application. However, it should be noted that the user operation used to zoom in or out the viewing window is different from a user operation used to move the viewing window. For example, the user operation used to zoom in or out the viewing window is sliding outward with an edge of the viewing window as a start point, and the user operation used to move the viewing window is first touching and holding the viewing window and then dragging the viewing window.

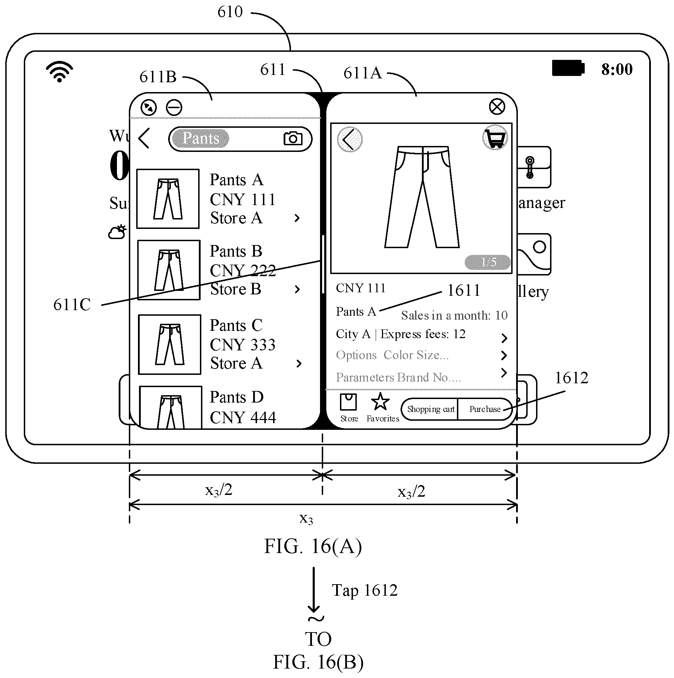

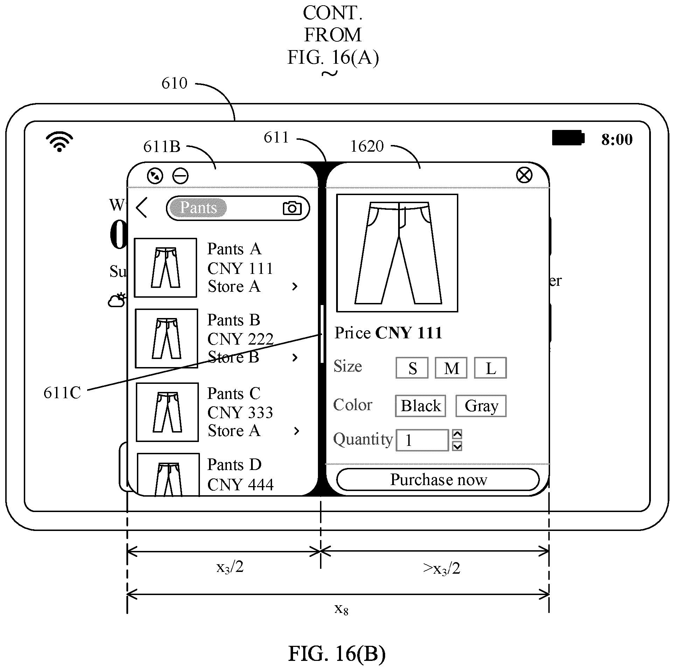

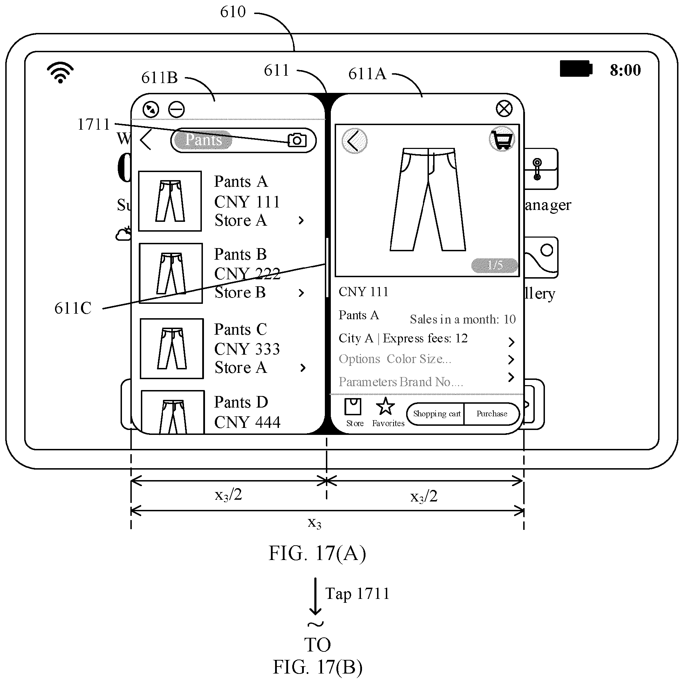

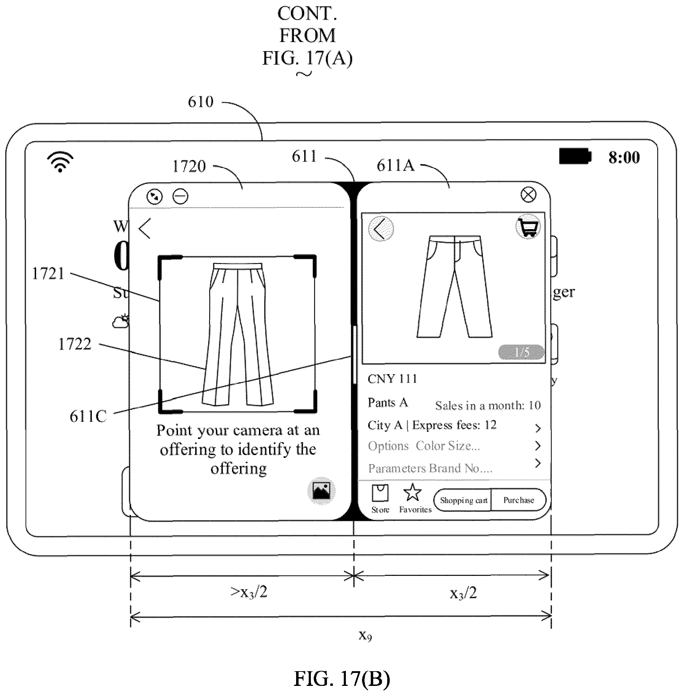

In another implementation, the electronic device 100 may further automatically zoom in or out a viewing window when detecting a specific event. For a specific example, refer to FIG. 16(A) and FIG. 16(B) and FIG. 17(A) and FIG. 17(B). Specific content of the specific event is not limited in this application. The specific event may be preset and/or learned by the electronic device 100, or may be determined by the electronic device 100 in response to a user operation.

In an implementation, after the implementations shown in FIG. 6(A) to FIG. 6(C) are performed, the electronic device 100 may display a desktop 610 shown in FIG. 16(A) (namely, the desktop 610 shown in FIG. 6(C)). On the desktop 610, the first interface 611A (with the width *x*₃/2) in the viewing window 611 (with the width *x*₃) may include an offering name 1611 ("pants A") and a purchase control 1612, where the purchase control 1612 is used to trigger to display a selection interface of specification information of an offering whose name is "pants A". The electronic device 100 may increase, in response to a touch operation (for example, a tap operation) for the purchase control 1612, a region that is in the viewing window 611 and that is used to display the first interface 611A, and display the selection interface in an increased region. For details, refer to the desktop 610 shown in FIG. 16(B). As shown in FIG. 16(B), a viewing window 611 on the desktop 610 includes the second interface 611B and a third interface 1620, and the third interface 1620 is the foregoing selection interface. A width *x*₈ of the viewing window 611 is greater than *x*₃, a width of the second interface 611B is still *x*₃/2, and a width of the third interface 1620 is greater than the width *x*₃/2 of the first interface 611A. An area of the viewing window 611 shown in FIG. 16(B) is greater than an area of the viewing window 611 shown in FIG. 16(A), an area of the second interface 611B shown in FIG. 16(B) is the same as an area of the second interface 611B shown in FIG. 16(A), and an area of the third interface 1620 shown in FIG. 16(B) is greater than an area of the first interface 611A shown in FIG. 16(A).

In an implementation, after the implementations shown in FIG. 6(A) to FIG. 6(C) are performed, the electronic device 100 may display a desktop 610 shown in FIG. 17(A) (namely, the desktop 610 shown in FIG. 6(C)). On the desktop 610, the second interface 611B (with the width *x*₃/2) in the viewing window 611 (with the width *x*₃) may include an image shooting control 1711, where the image shooting control 1711 is used to trigger to display an image shooting interface. The electronic device 100 may increase, in response to a touch operation (for example, a tap operation) for the image shooting control 1711, a region that is in the viewing window 611 and that is used to display the second interface 611B, and display the image shooting interface in an increased region. For details, refer to the desktop 610 shown in FIG. 17(B). As shown in FIG. 17(B), a viewing window 611 on the desktop 610 includes the first interface 611A and a fourth interface 1720, the fourth interface 1720 is the foregoing image shooting interface, and the fourth interface 1720 may include a viewfinder frame 1721. An image 1722 obtained through a camera of the electronic device 100 or a camera of the electronic device 200 may be displayed in the viewfinder frame 1721. The user may operate the electronic device 100 or the electronic device 200 to adjust the image 1722 displayed in the viewfinder frame 1721. As shown in FIG. 17(B), a width *x*₉ of the viewing window 611 is greater than *x*₃, a width of the first interface 611A is still *x*₃/2, and a width of the fourth interface 1720 is greater than the width *x*₃/2 of the second interface 611B. An area of the viewing window 611 shown in FIG. 17(B) is greater than an area of the viewing window 611 shown in FIG. 17(A), an area of the first interface 611A shown in FIG. 17(B) is the same as an area of the first interface 611A shown in FIG. 17(A), and an area of the fourth interface 1720 shown in FIG. 17(B) is greater than an area of the second interface 611B shown in FIG. 17(A).

In an implementation, the electronic device 100 may zoom out a viewing window in response to a touch operation for a viewing window displayed in full screen, that is, display the viewing window in non-full screen. For example, the electronic device 100 may zoom out the user interface 1210 in response to a user operation of dragging an edge of the user interface 1210 shown in FIG. 12(B) inward, and display the viewing window 611 shown in FIG. 12(A).

This is not limited to the foregoing examples. In some other examples, the implementations shown in FIG. 12(A) and FIG. 12(B) or FIG. 14 may not be performed after the implementations shown in FIG. 7(A) and FIG. 7(B) or FIG. 11(A) and FIG. 11(B). When displaying any viewing window in the app multiplier mode, the electronic device 100 may perform the implementations shown in FIG. 12(A) and FIG. 12(B) or FIG. 14. For example, the implementations shown in FIG. 12(A) and FIG. 12(B) or FIG. 14 are performed after the implementations shown in FIG. 6(A) to FIG. 6(C). This is not limited in this application.

This is not limited to the foregoing examples. In some other examples, the implementations shown in FIG. 13(A) and FIG. 13(B) or FIG. 15 may not be performed after the implementations shown in FIG. 8(A) and FIG. 8(B) or FIG. 10(A) and FIG. 10(B). When displaying any viewing window in the app multiplier mode, the electronic device 100 may perform the implementations shown in FIG. 13(A) and FIG. 13(B) or FIG. 15. For example, the implementations shown in FIG. 13(A) and FIG. 13(B) or FIG. 15 are performed after the implementations shown in FIG. 6(A) to FIG. 6(C). This is not limited in this application.

This is not limited to the foregoing examples. In some other examples, any one of the implementations in FIG. 7(A) to FIG. 11(B), FIG. 16(A) and FIG. 16(B), and FIG. 17(A) and FIG. 17(B) may not be performed after the implementations shown in FIG. 6(A) to FIG. 6(C). When displaying any viewing window in the app multiplier mode, the electronic device 100 may perform any one of the implementations in FIG. 7(A) to FIG. 11(B), FIG. 16(A) and FIG. 16(B), and FIG. 17(A) and FIG. 17(B). This is not limited in this application.

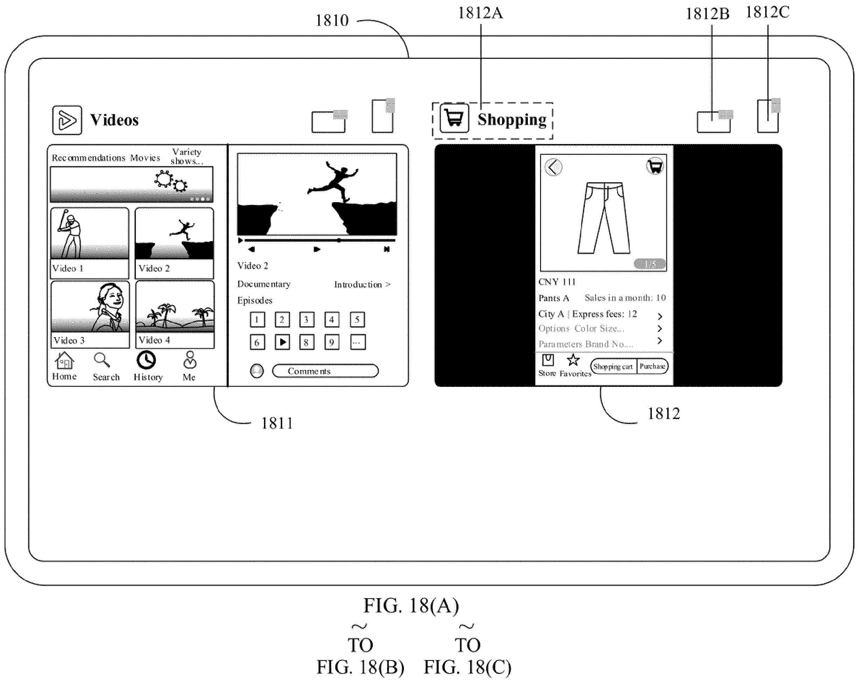

FIG. 18(A) to FIG. 18(C) are example diagrams of a user interface displayed in a viewing window.

As shown in FIG. 18(A), the electronic device 100 may display a user interface 1810. In an implementation, the user interface 1810 is a user interface of a multi-task viewing window/multi-task list. The user interface 1810 may include at least one currently run viewing window, for example, a viewing window 1811 and a viewing window 1812. The viewing window 1812 is used as an example for description. Similar to another viewing window, information 1812A (an icon and a name "shopping" of an application), a first display control 1812B, and a second display control 1812C of the application are displayed at an upper side of the viewing window 1812.

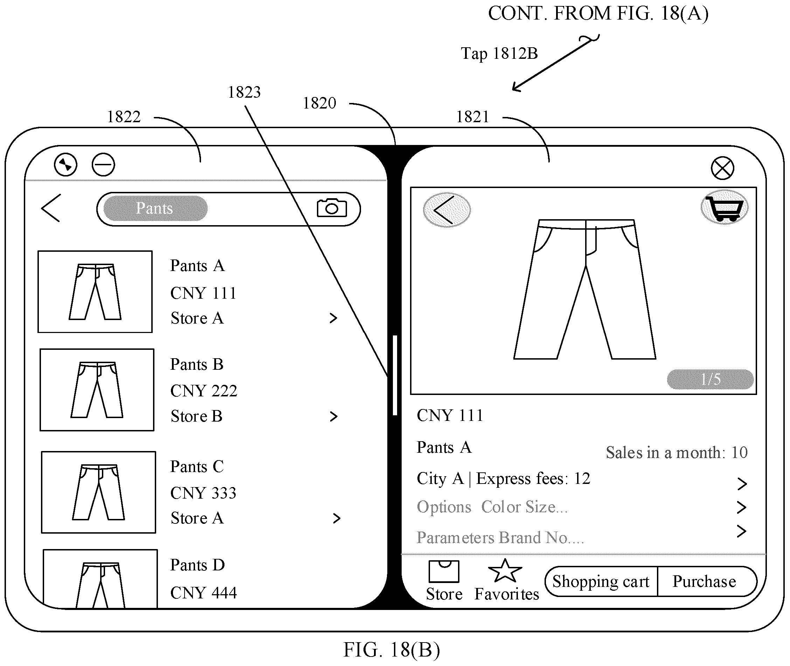

In an implementation, the electronic device 100 may display the viewing window 1812 in full screen in an app multiplier mode in response to a touch operation (for example, a tap operation) for the first display control 1812B. For details, refer to a user interface 1820 shown in FIG. 18(B). As shown in FIG. 18(B), the user interface 1820 may include a first interface 1821 of the shopping application displayed in the viewing window 1812, a newly added second interface 1822, and a drag bar 1823 located between the first interface 1821 and the second interface 1822. Specific descriptions are similar to those of the first interface 611A, the second interface 611B, and the drag bar 611C in the viewing window 611 shown in FIG. 6(C). Details are not described again.

In an implementation, the electronic device 100 may directly display the viewing window 1812 in full screen in response to a touch operation (for example, a tap operation) for the second display control 1812C. For details, refer to a user interface 1830 shown in FIG. 18(C). An interface included in the user interface 1830 is consistent with the interface included in the viewing window 1812.

In the implementations shown in FIG. 18(A) to FIG. 18(C), for any viewing window in a multi-task viewing window, the user may choose to directly display the viewing window in full screen, or may choose to display the viewing window in an app multiplier mode. This is flexible in use, meets personalized requirements of the user, and improves user experience.

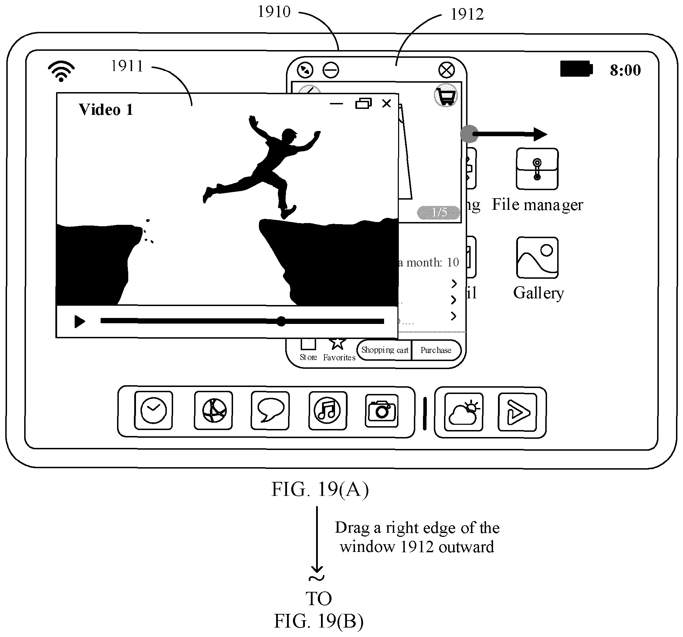

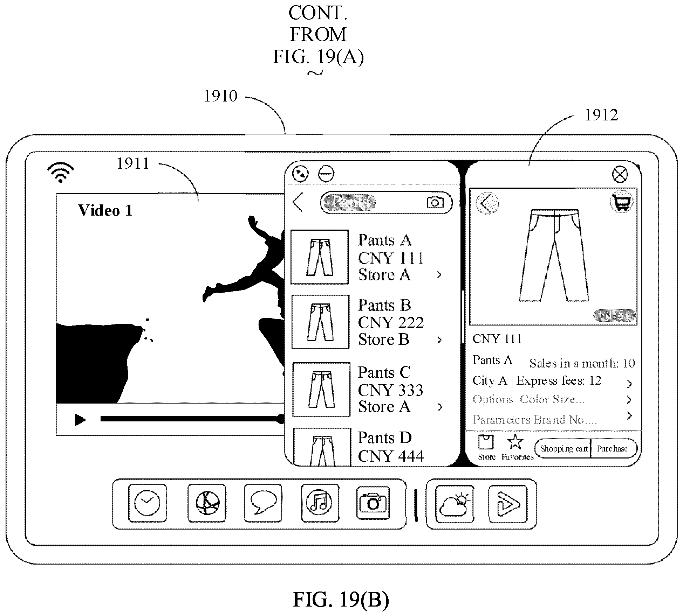

FIG. 19(A) and FIG. 19(B) are example diagrams of another user interface displayed in a viewing window.

As shown in FIG. 19(A), the electronic device 100 may display a desktop 1910, and the desktop 1910 may include a viewing window 1911 and a viewing window 1912. The viewing window 1911 is displayed at an upper layer of the viewing window 1912 (or which may be understood as that a display level of the viewing window 1911 is higher than a display level of the viewing window 1912). In an implementation, the electronic device 100 may receive a touch operation for the viewing window 1912. For example, the touch operation is sliding outward. In FIG. 19(A), an example in which the touch operation is dragging a right edge of the viewing window 1912 outward is used for illustration. The electronic device 100 may adjust the display level of the viewing window 1912 in response to the touch operation, and start an app multiplier mode of the viewing window 1912. For details, refer to a viewing window 1912 on the desktop 1910 shown in FIG. 19(B). As shown in FIG. 19(B), the viewing window 1912 is displayed at an upper layer of the viewing window 1911, that is, an adjusted display level of the viewing window 1912 is higher than a display level of the viewing window 1911. The viewing window 1912 shown in FIG. 19(B) may include a first interface of a shopping application displayed in the viewing window 1912 shown in FIG. 19(A) and a newly added second interface of the shopping application. Specific descriptions are similar to those of the first interface 611A and the second interface 611B in the viewing window 611 shown in FIG. 6(C). Details are not described again.

This is not limited to the implementations shown in FIG. 19(A) and FIG. 19(B). In another implementation, the desktop 1910 shown in FIG. 19(A) may include a plurality of viewing windows whose display levels are higher than the display level of the viewing window 1912. The electronic device 100 may adjust, in response to the touch operation shown in FIG. 19(A), the display level of the viewing window 1912 to a level higher than the levels of the plurality of viewing windows whose display levels are higher than the display level of the viewing window 1912, which may be understood as adjusting the display level of the viewing window 1912 to a highest level.

FIG. 19(A) and FIG. 19(B) are described by using a viewing window zooming process shown in FIG. 6(B) and FIG. 6(C) as an example. This is not limited thereto. Alternatively, when a viewing window zooming process in any implementation in FIG. 5(A) to FIG. 17(B) is triggered, adjustment of the display level of the viewing window 1912 may be triggered. In other words, when the electronic device 100 detects a user intention of zooming in or out a viewing window, a corresponding zooming operation may be performed on the viewing window, and a display level of the viewing window is adjusted to a relatively highest display level (for example, the display level is adjusted to be greater than or equal to display levels of all viewing windows run in a foreground of the electronic device). This facilitates the user to perform subsequent operations on the viewing window, complies with a use habit of the user, and improves user experience.

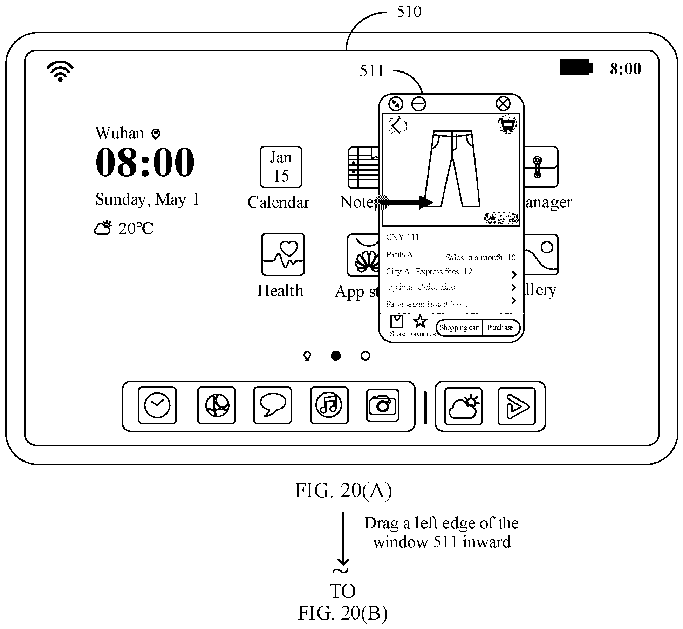

FIG. 20(A) to FIG. 20(C) are example diagrams of another user interface displayed in a viewing window.

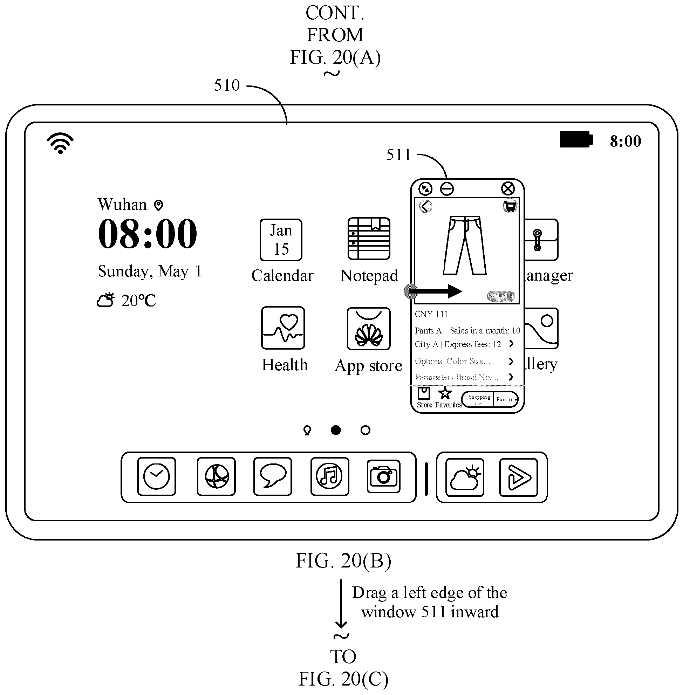

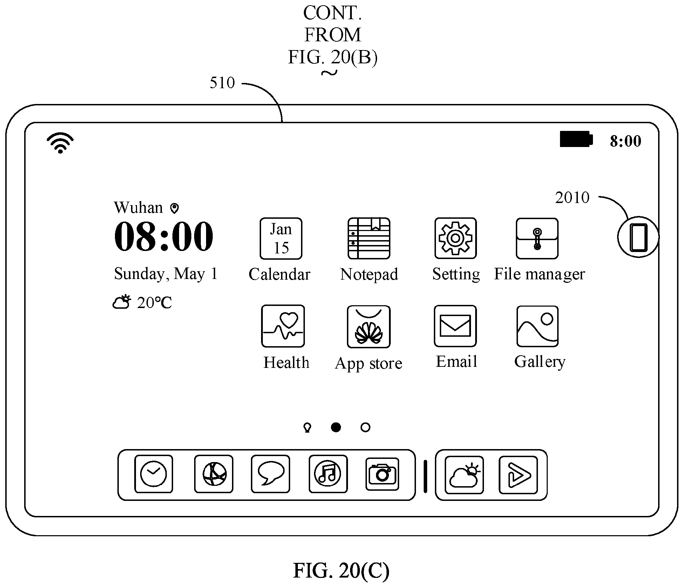

As shown in FIG. 20(A), the electronic device 100 may display the desktop 510 shown in FIG. 5(A). In an implementation, the electronic device 100 may receive a touch operation for the viewing window 511 on the desktop 510. For example, the touch operation is sliding inward. In FIG. 20(A), an example in which the touch operation is dragging a left edge of the viewing window 511 inward is used for illustration. The electronic device 100 may narrow the viewing window 511 in response to the touch operation. For a viewing window 511 obtained through narrowing, refer to a viewing window 511 (whose width is less than a width of the viewing window 511 shown in FIG. 5(A)) on the desktop 510 shown in FIG. 20(B). In an implementation, it is assumed that the viewing window 511 shown in FIG. 20(B) is a minimum viewing window that can be achieved through viewing window zooming. The electronic device 100 may receive a touch operation for the viewing window 511 shown in FIG. 20(B). For example, the touch operation is sliding inward. In FIG. 20(B), an example in which the touch operation is dragging a left edge of the viewing window 511 inward is used for illustration. The electronic device 100 may switch, in response to the touch operation, a display form of the viewing window 511 shown in FIG. 20(B) from a viewing window to a floating bubble. For details, refer to a floating bubble 2010 on the desktop 510 shown in FIG. 20(C). For example, the floating bubble 2010 may be displayed at a right edge of the screen.

In an implementation, the electronic device 100 may switch the display form of the floating bubble 2010 back to the viewing window, for example, display the viewing window 511 shown in FIG. 20(B), in response to a touch operation (for example, a tap operation) of the floating bubble 2010 shown in FIG. 20(C). It may be understood that, displaying the viewing window 511 in a form of the floating bubble may not affect viewing of other content by the user when the user does not want to view the viewing window 511, and the user may further quickly return to view the viewing window 511 through the floating bubble. This greatly facilitates use of the user and improves user experience.

This is not limited to the implementations shown in FIG. 20(A) to FIG. 20(C). In another implementation, the electronic device 100 may alternatively display the viewing window 511 in a form of a label in response to the touch operation shown in FIG. 20(B). Only information about the shopping application corresponding to the viewing window 511 is displayed on the label. A display form is not limited in this application.

This is not limited to the implementations shown in FIG. 20(A) to FIG. 20(C). In another implementation, the electronic device 100 may alternatively switch, in response to the touch operation shown in FIG. 20(B), a running manner of the viewing window 511 shown in FIG. 20(B) from foreground running (that is, visible to the user and interactive) to background running (that is, invisible to the user and non-interactive, but the electronic device 100 still runs the viewing window 511), and the user may start the viewing window 511 again through a multi-task list/multi-task viewing window. This is not limited in this application.

In an implementation, the electronic device 100 may change a size parameter of a viewing window in real time based on a user intention of zooming in or out a viewing window ratio. For example, when receiving a user operation of dragging the left edge of the viewing window 511 shown in FIG. 6(A) outward, the electronic device 100 may increase a width of the viewing window 511 in real time as a finger of the user moves from a gray circle shown in FIG. 6(A) to a gray circle shown in FIG. 6(B), until the width of the viewing window 511 is increased to the width of the viewing window 511 shown in FIG. 6(B). In another implementation, when detecting that the user intends to zoom in or out a viewing window to a target size, the electronic device 100 may directly set a size parameter of the viewing window to the target size. For example, when receiving a user operation of sliding leftward to a left edge of the viewing window 611 shown in FIG. 6(C) by using the left edge of the viewing window 511 shown in FIG. 6(A) as a start point, the electronic device 100 may determine, based on the user operation, an amplitude L (L is a positive number) by which the viewing window 511 is widened, increase the width of the viewing window 511 by L, and start the app multiplier mode of the viewing window 511, namely, the viewing window 611 shown in FIG. 6(C).

In the foregoing implementation, the electronic device 100 may adjust the size parameter of the viewing window based on the user intention of zooming in or out the viewing window ratio, and freely switch between viewing windows of a plurality of layouts/forms such as a vertical viewing window (displaying one interface of one application), a horizontal viewing window in an app multiplier mode (displaying two interfaces of one application), a horizontal full-screen viewing window (displaying one interface of one application), and a floating bubble, to provide different change effects of the same viewing window for the user.

The display method in this application is described based on the foregoing embodiments. The method may be applied to the electronic device 100 shown in FIG. 3. The method may be applied to the electronic device 100 shown in FIG. 4.

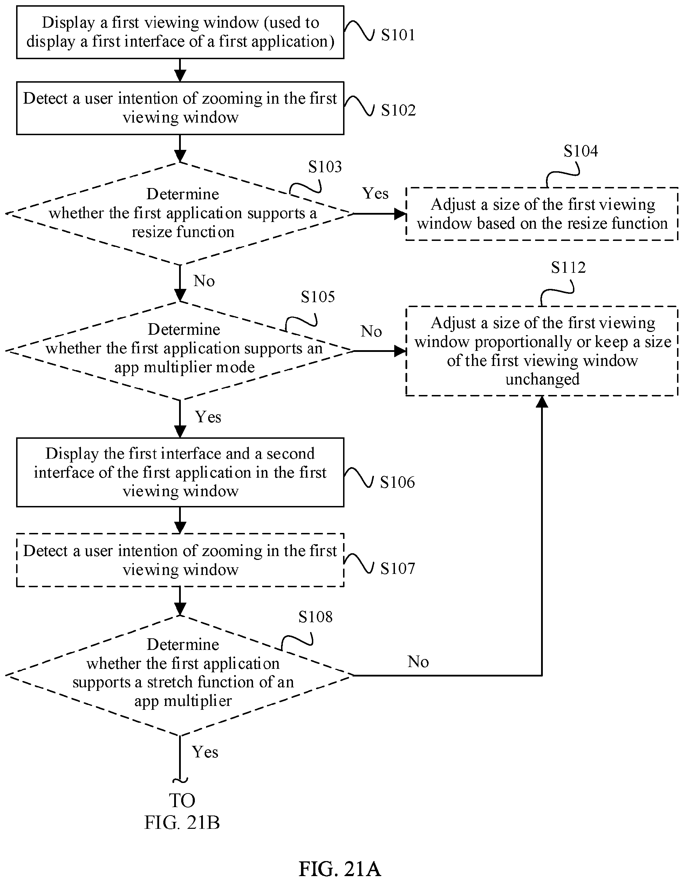

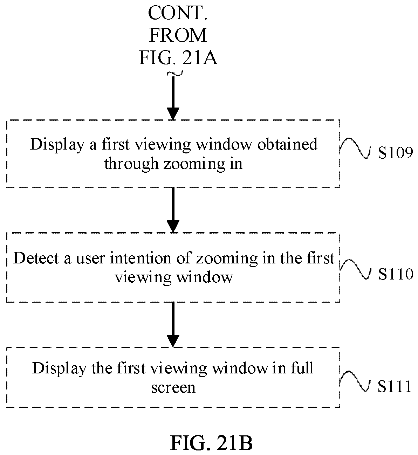

Refer to FIG. 21A and FIG. 21B. FIG. 21A and FIG. 21B are a schematic flowchart of a display method according to this application. The method may include, but is not limited to, the following steps.

S101: An electronic device displays a first viewing window (used to display a first interface of a first application).

In an implementation, the electronic device displays the first viewing window in a part of a region of a display. For a specific example, refer to the viewing window 511 shown in FIG. 5(A) and FIG. 5(B) and FIG. 6(A) to FIG. 6(C).

S102: The electronic device detects a user intention of zooming in the first viewing window.

In an implementation, when receiving a zooming operation for the first viewing window, the electronic device may detect a user intention of zooming in or out the first viewing window. In some examples, the zoom operation is a touch operation performed on the first viewing window displayed on the display. For example, when receiving the user operation of dragging the edge of the viewing window 511 outward shown in FIG. 5(A) and FIG. 5(B) and FIG. 6(A) to FIG. 6(C), the electronic device may detect a user intention of zooming in the first viewing window. In some other examples, the zoom operation is a voice input. In some other examples, the zoom operation is a gesture operation. This is not limited thereto. Alternatively, the zoom operation may be a brain wave or the like. A specific type of the zooming operation is not limited in this application.

In another implementation, when detecting a specific event, the electronic device may detect a user intention of zooming in or out the first viewing window. In a case, the specific event is automatically determined by the electronic device. For example, the electronic device presets the specific event, and/or the electronic device learns the specific event from another device, and/or the electronic device learns the specific event based on operation behavior of a user who uses the device (for example, the user manually zooms in a viewing window each time starting a type of interface, and therefore, the electronic device detects a user intention of zooming in the viewing window when detecting an event of starting the type of interface). In another case, the specific event is determined by the electronic device in response to a user operation, which may be understood as that the user sets the specific event. In some examples, it is assumed that the first interface 611A of the shopping application shown in FIG. 16(A) is displayed on the first viewing window. When receiving a touch operation (for example, a tap operation) for the purchase control 1612 in the first interface 611A, the electronic device detects a specific event of starting a selection interface of specification information of an offering, and therefore detects a user intention of zooming in the first viewing window. In some other examples, it is assumed that the second interface 611B of the shopping application shown in FIG. 17(A) is displayed on the first viewing window. When receiving a touch operation (for example, a tap operation) on the image shooting control 1711 in the second interface 611B, the electronic device detects a specific event of starting an image shooting interface, and therefore detects a user intention of zooming in the first viewing window. Specific content of the specific event is not limited in this application.

S103: The electronic device determines whether the first application supports a resize (resize) function.

In an implementation, S103 is an optional step.

In an implementation, the resize function is a resize function of randomly zooming and dynamically changing a layout. It may be understood that currently, most applications applied to a terminal do not support a resize function.

In an implementation, when determining that the first application supports the resize function, the electronic device may perform S104. When determining that the first application does not support the resize function, the electronic device may perform S105.

S104: The electronic device adjusts a size of the first viewing window based on the resize function.

In an implementation, S104 is an optional step.

In an implementation, the electronic device randomly zooms in or out the first viewing window and dynamically changes a layout of the first viewing window based on a user intention of zooming in the first viewing window (namely, the zoom-in intention in S102). It may be understood that the electronic device adjusts the first viewing window based on the resize function, and to a maximum extent, the first viewing window may be displayed in full screen. In some examples, the electronic device may zoom in the viewing window 511 shown in FIG. 5(A) based on the resize function, and may display the user interface 1410 shown in FIG. 14 when the viewing window 511 is zoomed in to a maximum extent.

S105: The electronic device determines whether the first application supports an app multiplier mode.

In an implementation, S105 is an optional step.

In an implementation, when the first application supports the app multiplier mode, the electronic device may start the app multiplier mode of the first viewing window, and perform S106. When the first application does not support the app multiplier mode, the electronic device may perform S112.

S106: The electronic device displays the first interface and a second interface of the first application in a first viewing window.

In an implementation, when a user intention of zooming in the first viewing window (namely, the zoom-in intention in S102) is used to zoom in the first viewing window to a preset size, the electronic device may display, in the first viewing window, the previously displayed first interface and the newly added second interface of the first application, that is, run the first viewing window in an app multiplier mode, and optionally, specifically, start the app multiplier mode of the first viewing window. The preset size is a size in which a ratio of a width to a height is greater than or equal to a preset ratio. In some examples, a proportion of the first interface in the first viewing window is equal to a proportion of the second interface in the first viewing window. For example, widths and heights of the first interface and the second interface are the same. In some examples, the preset ratio is greater than 1, for example, 4/3 shown in FIG. 6(A) to FIG. 6(C). For specific examples of S102 and S106, refer to FIG. 6(A) to FIG. 6(C).

In an implementation, that the electronic device starts the app multiplier mode of the first viewing window includes: The electronic device starts a display manner of adding an Activity. Before the electronic device starts the app multiplier mode of the first viewing window, the first application includes a first Activity corresponding to the first interface. After the electronic device starts the app multiplier mode of the first viewing window, the first application includes the first Activity corresponding to the first interface and a second Activity corresponding to the second interface.

S107: The electronic device detects a user intention of zooming in the first viewing window (which is run in the app multiplier mode).

In an implementation, descriptions of S107 and S102 are similar. In an implementation, the electronic device may specifically detect a user intention of zooming in any interface in the first viewing window.

S108: The electronic device determines whether the first application supports a stretch function of an app multiplier.

In an implementation, S108 is an optional step.

In an implementation, that the electronic device determines whether the first application supports a stretch function of an app multiplier includes: The electronic device determines whether a viewing window of the first application can be zoomed in or out in the app multiplier mode, and/or the electronic device determines whether a window in a viewing window of the first application can be zoomed in or out in the app multiplier mode.

In an implementation, when the first application supports the stretch function of the app multiplier, the electronic device may perform S109. When the first application does not support the stretch function of the app multiplier, the electronic device may perform S112.

S109: The electronic device displays a first viewing window obtained through zooming in.

In an implementation, S109 is an optional step.

In an implementation, the electronic device may zoom in the first viewing window based on a user intention of zooming in the first viewing window run in the app multiplier mode (namely, the zoom-in intention in S107).

In an implementation, the user intention of zooming in the first viewing window run (namely, the zoom-in intention in S107) is for the first interface or the second interface in the first viewing window. Therefore, the electronic device may specifically zoom in the first interface or the second interface in the first viewing window (the first viewing window is also zoomed in as a whole). For example, when the first application does not support the resize function, the electronic device may directly stretch the first interface or the second interface vertically. An example of stretching an interface is similar to that in FIG. 2. When the first application supports the resize function, the electronic device may adjust the size of the first interface or the second interface based on the resize function. An adjusted interface is similar to the interfaces shown in FIG. 14 and FIG. 15 (the adjusted interface is not displayed in full screen). In some examples, it is assumed that the zoom-in intention is for the first interface, a proportion of the first interface in a first viewing window obtained through zooming in is greater than a proportion of the second interface in the first viewing window obtained through zooming in.

The following shows some examples of S107 and S109.

In some examples, when receiving the user operation of dragging the left edge of the viewing window 611 outward shown in FIG. 7(A) and FIG. 7(B), the electronic device may detect a user intention of zooming in the second interface 611B located at the left side of the viewing window 611. For a viewing window 611 obtained through zooming in, refer to the viewing window 611 shown in FIG. 7(B).

In some examples, when receiving the user operation of dragging the right edge of the viewing window 611 outward shown in FIG. 8(A) and FIG. 8(B), the electronic device may detect a user intention of zooming in the first interface 611A located at the right side of the viewing window 611. For a viewing window 611 obtained through zooming in, refer to the viewing window 611 shown in FIG. 8(B).

In some examples, when receiving the user operation of dragging the drag bar 611C located between the first interface 611A and the second interface 611B in the viewing window 611 leftward shown in FIG. 10(A) and FIG. 10(B), the electronic device may detect a user intention of zooming in the first interface 611A located at the right side of the viewing window 611. For a viewing window 611 obtained through zooming in, refer to the viewing window 611 shown in FIG. 10(B).

In some examples, when receiving the user operation of dragging the drag bar 611C located between the first interface 611A and the second interface 611B in the viewing window 611 rightward shown in FIG. 11(A) and FIG. 11(B), the electronic device may detect a user intention of zooming in the second interface 611B located at the left side of the viewing window 611. For a viewing window 611 obtained through zooming in, refer to the viewing window 611 shown in FIG. 11(B).

In some examples, when detecting the specific event (triggered by the first interface 611A in the viewing window 611 shown in FIG. 16(A) and FIG. 16(B)) of starting the selection interface of the specification information of the offering, the electronic device may detect a user intention of zooming in the first interface 611A. For a viewing window 611 obtained through zooming in, refer to the viewing window 611 shown in FIG. 16(B).

In some examples, when detecting the specific event (triggered by the second interface 611B in the viewing window 611 shown in FIG. 17(A) and FIG. 17(B)) of starting the image shooting interface, the electronic device may detect a user intention of zooming in the second interface 611B. For a viewing window 611 obtained through zooming in, refer to the viewing window 611 shown in FIG. 17(B).

S110: The electronic device detects a user intention of zooming in the first viewing window (which is run in the app multiplier mode).

In an implementation, S110 is an optional step.

In an implementation, descriptions of S110 and S102 are similar. In an implementation, the electronic device may specifically detect a user intention of zooming in the first viewing window to be displayed on the entire display, namely, an intention of displaying the first viewing window in full screen.

S111: The electronic device displays the first viewing window in full screen.

In an implementation, S111 is an optional step.

In an implementation, the electronic device may display the first viewing window in the app multiplier mode in full screen based on a user intention of zooming in the first viewing window run in the app multiplier mode (namely, the zoom-in intention in S110). In some examples, a proportion of the first interface in the display is equal to a proportion of the second interface in the display. For example, widths of the first interface and the second interface are the same. In some other examples, the user intention of zooming in the first viewing window (namely, the zoom-in intention in S110) is for any interface (the first interface or the second interface) in the first viewing window. An example in which the interface is the first interface is used for description. A case in which the interface is the second interface is similar. In this case, a proportion of the first interface in the display is greater than a proportion of the second interface in the display. A specific example is described below.

For example, when receiving the user operation of dragging the left edge of the viewing window 611 outward shown in FIG. 12(A), the electronic device may detect a user intention of displaying the viewing window 611 in full screen and a user intention of zooming in the second interface 611B located at the left side of the viewing window 611. For a viewing window 611 displayed in full screen, refer to the user interface 1210 shown in FIG. 12(B).

For example, when receiving the user operation of dragging the right edge of the viewing window 611 outward shown in FIG. 13(A), the electronic device may detect a user intention of displaying the viewing window 611 in full screen and a user intention of zooming in the first interface 611A located at the right side of the viewing window 611. For a viewing window 611 displayed in full screen, refer to the user interface 1310 shown in FIG. 13(B).

In another implementation, the electronic device may end the app multiplier mode of the first viewing window, and display any interface (the first interface or the second interface) in the first viewing window in full screen. In some examples, the user intention of zooming in the first viewing window (namely, the zoom-in intention in S110) is for any interface (the first interface or the second interface) in the first viewing window. Therefore, the electronic device may display the first interface or the second interface in full screen. A specific example is described below.

For example, when receiving the user operation of dragging the left edge of the viewing window 611 outward shown in FIG. 12(A), the electronic device may detect a user intention of zooming in the second interface 611B located at the left side of the viewing window 611 (which may also be referred to as an intention of displaying the second interface 611B in full screen). Therefore, the electronic device may display the second interface 611B in full screen. For details, refer to the user interface 1410 shown in FIG. 14.

For example, when receiving the user operation of dragging the right edge of the viewing window 611 outward shown in FIG. 13(A), the electronic device may detect a user intention of zooming in the first interface 611A located at the right side of the viewing window 611 (which may also be referred to as an intention of displaying the first interface 611A in full screen). Therefore, the electronic device may display the first interface 611A in full screen. For details, refer to the user interface 1510 shown in FIG. 15.

S112: The electronic device adjusts a size of the first viewing window proportionally or keeps a size of the first viewing window unchanged.

In an implementation, S112 is an optional step.

In an implementation, for an example in which the electronic device adjusts the size of the first viewing window proportionally, refer to FIG. 1(A) and FIG. 1(B) and FIG. 5(A) and FIG. 5(B). This is not limited to the implementations shown in S112. In another implementation, the electronic device may alternatively stretch the first viewing window horizontally based on a user intention of zooming in or out the first viewing window. For a specific example, refer to FIG. 2.

This is not limited to the descriptions shown in FIG. 21A and FIG. 21B. In another implementation, the electronic device may alternatively detect a user intention of zooming out the first viewing window, and zoom out the first viewing window based on the zoom-out intention. In some examples, the electronic device may zoom out the first viewing window (that is, display the first viewing window in non-full screen) based on a detected user intention of zooming out the first viewing window that is displayed in full screen and in the app multiplier mode. For example, the user interface 1310 shown in FIG. 13(B) is changed to the viewing window 611 shown in FIG. 13(A), or the user interface 1210 shown in FIG. 12(B) is changed to the viewing window 611 shown in FIG. 12(A). In some examples, the electronic device may zoom out an interface based on a detected user intention of zooming out the interface in the first viewing window in the app multiplier mode (the first viewing window is also zoomed out). In some examples, the electronic device may end the app multiplier mode of the first viewing window based on a detected user intention of zooming out the first viewing window in the app multiplier mode. For a specific example, refer to FIG. 9(A) to FIG. 9(C). In some examples, when the first viewing window is zoomed out to be a minimum viewing window (for example, the viewing window 511 shown in FIG. 20(B)), the electronic device detects a user intention of zooming out the first viewing window. In this case, the electronic device may switch, based on the zoom-out intention, a display form of the first viewing window to another display form that occupies a smaller region, for example, the floating bubble 2010 or the label shown in FIG. 20(C). This application imposes no limitation on the switched display form.

In the method shown in FIG. 21A and FIG. 21B, the electronic device starts the app multiplier mode of the first viewing window when detecting a user intention of zooming in the first viewing window (for example, a specific intention of zooming in the first viewing window to a preset size), instead of starting the app multiplier mode (displaying both a previously displayed interface and a newly started interface) when the user triggers starting of the new interface. It may be understood that the app multiplier mode in this application is applied to a scenario in which the user intends to zoom in the first viewing window, and is used to provide a viewing window zooming function with good use experience for the user, to avoid a poor visual effect and poor operation experience that are caused by proportional zooming or direct stretching of the viewing window. In addition, the electronic device may further zoom in or out the viewing window in the app multiplier mode of the viewing window based on a user intention of zooming in or out the viewing window, and implement a zooming effect of an interface in the viewing window, to provide different display effects of the viewing window. For example, an interface that is related to the user zooming intention and that is in the viewing window is zoomed in or zoomed out (the entire viewing window is also zoomed in or zoomed out). A viewing window change meets the user intention. In this way, the user can freely adjust a size of the viewing window based on the display of the electronic device. This meets user experience of using the viewing window to a maximum extent and greatly improves use experience of the user.

All or some of the methods in embodiments of this application may be implemented by using software, hardware, firmware, or any combination thereof. When software is used to implement the foregoing embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like. In conclusion, the foregoing embodiments are merely intended for describing the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A display method, applied to an electronic device, wherein the method comprises:
displaying a first viewing window, wherein the first viewing window comprises a first interface of a first application;
receiving a first user operation, wherein the first user operation is used to widen the first viewing window; and
displaying a second viewing window in response to the first user operation, wherein the second viewing window comprises the first interface and a second interface of the first application.

2. The method according to claim 1, wherein the first user operation comprises a user operation of sliding leftward with a left edge of the first viewing window as a start point, or a user operation of sliding rightward with a right edge of the first viewing window as a start point.

3. The method according to claim 1, wherein the displaying a second viewing window comprises:
displaying the second viewing window when a ratio of a width to a height of a widened first viewing window is greater than or equal to a preset ratio, wherein the width of the widened first viewing window is determined based on the first user operation.

4. The method according to any one of claims 1 to 3, wherein the method further comprises:
displaying, in response to the first user operation when the ratio of the width to the height of the widened first viewing window is less than the preset ratio, a third viewing window obtained by widening the first viewing window.

5. The method according to claim 1, wherein the second interface is a previous-level interface or a next-level interface of the first interface.

6. The method according to claim 1, wherein widths of the first interface and the second interface in the second viewing window are equal.

7. The method according to any one of claims 1 to 6, wherein the method further comprises:
receiving a second user operation, wherein the second user operation is used to widen the first interface in the second viewing window; and
displaying, in response to the second user operation, a fourth viewing window obtained by widening the second viewing window, wherein a width of the first interface in the fourth viewing window is greater than a width of the first interface in the second viewing window, and a width of the second interface in the fourth viewing window is equal to a width of the second interface in the second viewing window.

8. The method according to claim 7, wherein the first interface in the second viewing window is located on a left side of the second interface, and the second user operation comprises:
a user operation of sliding leftward with a left edge of the second viewing window as a start point; or
a user operation of sliding rightward with a drag bar that is in the second viewing window and that is located between the first interface and the second interface as a start point; or
a user operation performed on a first control in the first interface.

9. The method according to claim 7, wherein the widths of the first interface and the second interface in the second viewing window are equal, and the width of the first interface is greater than the width of the second interface in the fourth viewing window.

10. The method according to claim 7, wherein the displaying a fourth viewing window obtained by widening the second viewing window comprises:
displaying, in full screen, the fourth viewing window obtained by widening the second viewing window.

11. The method according to claim 7, wherein the method further comprises:
receiving a third user operation, wherein the third user operation is used to widen the fourth viewing window; and
displaying, in full screen in response to the third user operation, a fifth viewing window obtained by widening the fourth viewing window.

12. The method according to claim 7, wherein the method further comprises:
receiving a fourth user operation, wherein the fourth user operation is used to widen the first interface in the fourth viewing window; and
displaying the first interface in full screen in response to the fourth user operation.

13. The method according to claim 11, wherein the method further comprises:
receiving a fifth user operation, wherein the fifth user operation is used to narrow the fifth viewing window; and
displaying, in response to the fifth user operation, a sixth viewing window obtained by narrowing the fifth viewing window.

14. The method according to any one of claims 1 to 6, wherein the method further comprises:
receiving a sixth user operation, wherein the sixth user operation is used to narrow the first interface in the second viewing window; and
displaying, in response to the sixth user operation, a seventh viewing window obtained by narrowing the second viewing window, wherein a width of the first interface in the seventh viewing window is less than a width of the first interface in the second viewing window, and a width of the second interface in the seventh viewing window is equal to a width of the second interface in the second viewing window.

15. The method according to any one of claims 1 to 6, wherein the method further comprises:
receiving a seventh user operation, wherein the seventh user operation is used to narrow the second viewing window; and
displaying an eighth viewing window in response to the seventh user operation, wherein the eighth viewing window comprises the first interface or the second interface.

16. The method according to any one of claims 1 to 6, wherein the method further comprises:
receiving an eighth user operation, wherein the eighth user operation is used to narrow the first viewing window; and
displaying a second control in response to the eighth user operation.

17. The method according to any one of claims 1 to 6, wherein the displaying a second viewing window comprises:
displaying the second viewing window when the first application supports an app multiplier mode; and
the method further comprises:
displaying a ninth viewing window in response to the first user operation when the first application does not support the app multiplier mode, wherein the ninth viewing window is obtained by zooming in the first viewing window proportionally, and the ninth viewing window comprises the first interface.

18. The method according to any one of claims 1 to 6, wherein the displaying a second viewing window comprises:
displaying the second viewing window when the first application does not support a resize function; and
the method further comprises:
displaying a tenth viewing window in response to the first user operation when the first application supports the resize function, wherein the tenth viewing window is obtained by widening the first viewing window based on the resize function, and the tenth viewing window comprises the first interface.

19. The method according to claim 7, wherein the displaying a fourth viewing window obtained by widening the second viewing window comprises:
displaying, when the first application supports a stretch function in an app multiplier mode, the fourth viewing window obtained by widening the second viewing window; and
the method further comprises:
displaying an eleventh viewing window in response to the second user operation when the first application does not support the stretch function in the app multiplier mode, wherein the eleventh viewing window is obtained by zooming in the second viewing window proportionally, and a proportion of the first interface in the eleventh viewing window is equal to a proportion of the first interface in the second viewing window.

20. The method according to any one of claims 1 to 6, wherein the method further comprises:
displaying a third interface, wherein the third interface comprises a plurality of viewing windows run on the electronic device, the plurality of viewing windows comprise a twelfth viewing window, and the twelfth viewing window comprises a fourth interface of a second application;
receiving a ninth user operation performed on a third control in the third interface, wherein the third control is related to the twelfth viewing window; and
displaying a thirteenth viewing window, wherein the thirteenth viewing window comprises the fourth interface and a fifth interface of the second application.

21. The method according to any one of claims 1 to 6, wherein the displaying a first viewing window comprises:
displaying the first viewing window and a fourteenth viewing window, wherein the first viewing window is displayed at a lower layer of the fourteenth viewing window; and
the displaying a second viewing window comprises:
displaying the second viewing window and the fourteenth viewing window, wherein the second viewing window is displayed at an upper layer of the fourteenth viewing window.

22. An electronic device, comprising a transceiver, a processor, and a memory, wherein the memory is configured to store a computer program, and the processor invokes the computer program to perform the method according to any one of claims 1 to 21.

23. A computer storage medium, comprising a computer program, wherein the computer program comprises instructions, and when the instructions are run on a processor, the method according to any one of claims 1 to 22 is implemented.

24. A computer program product, wherein when the computer program product runs on an electronic device, the electronic device is enabled to perform the method according to any one of claims 1 to 22.
